# EUROPEAN PATENT SPECIFICATION

(11) **EP 2 891 101 B1**
(45) Date of publication and mention of the grant of the patent: **09.11.2016**
(21) Application number: 13815843.1
(22) Date of filing: 30.08.2013
(51) Int. Cl.: G06F 9/455, G06F 9/44, G06F 11/36, G06F 9/45, G06F 21/57

(54) **A SYSTEM FOR ANALYZING APPLICATIONS IN ORDER TO FIND SECURITY AND QUALITY ISSUES**
SYSTEM ZUR GENAUEN ANALYSE VON ANWENDUNGEN ZUM AUFFINDEN VON SICHERHEITS- UND QUALITÄTSPROBLEMEN
SYSTÈME PERMETTANT D'ANALYSER PRÉCISÉMENT DES APPLICATIONS AFIN DE DÉTECTER DES PROBLÈMES DE SÉCURITÉ ET DE QUALITÉ

(30) Priority: 31.08.2012 IN MM22882012
(43) Date of publication of application: 08.07.2015
(73) Proprietor: Iappsecure Solutions Pvt. Ltd., Gujarat State, Ahmedabad 380015 (IN)
(72) Inventor: PATEL, Vimal, Ahmedabad 380059 (IN)
(74) Representative: Haverkamp, Jens
(86) International application number: PCT/IN2013/000532
(87) International publication number: WO 2014/041561

(56) References cited:
- WO-A1-2008/039964

## Description

### FIELD OF INVENTION

The present invention relates to field of application analysis and more specifically to analysis of applications for determining security and quality issues. The present invention describes a novel application analysis system providing a platform for accurately analyzing applications which is useful in finding security and quality issues in an application. In particular, the present invention is composed of an advanced fusion analyzer which gains a detailed understanding of the application behavior by using a novel multi-way coordination and orchestration across components used in the present invention to build and continuously refine a model representing knowledge and behavior of the application as a large network of objects across different dimensions and using reasoning and learning logic on this model along with information and events received from the components to both refine the model further as well as drive the components further by sending information and events to them and again using the information and events received as a result to further trigger the entire process until the system stabilizes.

The present invention is useful in analysis of internet/intranet based web applications, desktop applications, mobile applications and also embedded systems as well as for hardware, equipment and machines controlled by software.

### BACKGROUND AND PRIOR ART

The tremendous growth of software development and reliance on internet based applications for many aspects of modern life has also opened doors for attackers to inflict serious damage to software systems and steal highly sensitive information, causing heavy financial and/or reputation loss to companies and organizations serving their customers/users through various internet based applications.

Companies especially those with vulnerable applications face serious challenges in keeping their applications from being hacked as high-profile security breaches are becoming common. The reason is multifold.
1) Developers often overlook security aspect when designing or implementing software. Building secure software requires security knowledge, more thought and more discipline during design and implementation which is a long term investment. However, under pressure for delivering features for business, security aspect may be overlooked or ignored and it usually has no immediate consequences. Also, business users normally cannot distinguish between secure and insecure software. The risk introduced however when averaged over large number of applications makes this a short term gain but a long term loss. As a result large amount of insecure software is still being produced which cannot withstand attacks by highly motivated, focused and technically skilled attackers. The only way to solve such problem properly at a later point in time is to go back to the application source and make the fix. However, if there is a design level flaw then the cost of fixing can be high, often requiring large amount of design change and software rewrite. Businesses are often not willing to invest large amount in securing software later especially when it is difficult to measure or gauge risk of an attack. When a security breach occurs it becomes difficult to justify why security considerations were not taken in the first place which could have avoided costly financial and/or reputation loss as well as costly fixes.
2) Defending applications and attacking applications are on two ends of the spectrum. This is a very important yet easily overlooked point. Some companies may only rely on penetration testers and/or black box scanners to identify vulnerabilities in their applications on the assumption that since attackers only have external access to application, using same approach to identify vulnerabilities would be sufficient. However, there is a serious flaw with this assumption. Whereas an attacker only needs to find and exploit one vulnerability and will look for the easiest one to find and exploit, that is, the weakest link, in order to secure an application all vulnerabilities need to be identified and fixed. Further, attackers can spend months with full focus on one suspected behavior of application and plenty of offline study and analysis to find and exploit a single vulnerability whereas a penetration tester typically only has few weeks per application to find vulnerabilities. Even automated black box scanners can typically find only small portion of actual vulnerabilities. Further, finding all vulnerabilities with external checks only, whether manual or automatic or a combination of both is a scientifically flawed approach.
3) When it comes to manual testing, there are large number of security categories and vulnerabilities which have to be checked on every use case, which is extremely difficult and time consuming on a large application. When it comes to automated black box scanners, they face many challenges in both efficiently crawling as well as coming up with right data as well as fuzzed data with no guarantee that they have touched every part of software on modern web 2.0 and complex multi-tiered applications. When it comes to development, every application has its own unique business logic and rules. Human errors inevitably occur and every member of development team may not be expert in security aspects resulting in insecure software. When it comes to threat landscape, software which is considered secure today may no longer be considered secure tomorrow as new threats may emerge.
4) Measuring security posture of an application using manual or automated approaches that benchmark against limited categories of vulnerabilities can give a false sense of accuracy. Even within these categories thorough analysis of application logic for proper validations can be very difficult. While it is certainly desirable to address problems starting with top attacks happening today, it is important to note that the reason attackers go after relatively generic and easier to exploit vulnerabilities is because there is often no motivation to go after other types of flaws. For example, if an application has SQL injection flaw which is a type of injection flaw, there is often no need or motivation to find other flaws as SQL injection itself is catastrophic. As applications start hardening against these categories, attackers will start spending effort on other types of flaws such as logical flaws which are unique to application and the statistics will change. Though, finding logical flaws automatically is extremely difficult and needs human effort as well but benchmarking against limited categories of vulnerabilities can give a false sense of accuracy.

### Current Approaches and Limitations

Following approaches are in use today for analyzing application for security issues. Their limitations are also mentioned.

Although the terms black box and dynamic application security testing (DAST) are used interchangeably, dynamic application security testing (DAST) done from external perspective only is technically a form of black box approach. Similarly while the terms white box and static application security testing (SAST) are used interchangeably, static application security testing (SAST) is technically a form of white box approach.

### 1) Dynamic Application Security Testing (DAST) - Black Box Approach

In a black box approach, analysis of application is performed without having any knowledge of internals of the application and by only interacting with external interfaces provided by the application, that is, interaction with the application is similar to that of a user checking the application without any knowledge of the internal design or implementation of the application. Such type of analysis when done by automated tools for finding security vulnerabilities is also called dynamic application security testing or DAST. Although black box testing has advantages like being able to perform end-to-end tests, trying to find all vulnerabilities with external tests only is a scientifically flawed approach.

A black box approach is similar to external tests performed on a patient by a doctor without being allowed to perform any internal tests. It is also similar to external tests performed on a car by a mechanic like starting or test driving a car without being allowed to open the hood to check internal components. Thus black box approach can often only see symptoms of a problem and not the root cause of the problem.

A black box analyzer attempts to work in much the same way as an attacker or penetration tester trying to find vulnerabilities in an application. It also has ability to perform automated tests. It has advantages like being able to perform end-to-end tests and also check the web server and application server within which the application is hosted for configuration related vulnerabilities. However, black box analyzers also have many limitations which are described later.

In order to perform an assessment a black box scanner would have to perform following steps:
1) The first step is exploring (or crawling or discovering) resources starting from an initial URL (web site address) and automatically going over every functionality of the application and in the process collecting information like other URLs, request/response structures, forms, input parameters (such as URL parameters, form parameters and cookie values). This is much like a normal user using an application and clicking on every feature of the application.
2) The second step is fuzzing (checking for vulnerabilities like an attacker or penetration tester would) where large number requests containing specially crafted payloads for every input (whether visible or invisible from browser) of every page is sent and the responses are analyzed and checked for behavior indicative of vulnerabilities or suspected vulnerabilities.

The above is a simplification of how black box scanners work. Modern black box scanners are far more sophisticated and there are significant challenges that need to be overcome and effort required in building them.

However, modern applications are also not simple and can be significantly complex. Modern applications like Web 2.0 - AJAX, RIA running in front of services exposed via protocols such as Web Services, XML, JSON, AMF by sophisticated multi-tiered server side design on top of modern frameworks and having complex validations and application logic can make performing accurate analysis very difficult for black box scanners. Some challenges that scanners have to face are mentioned below:
1) Crawling challenges - Web 2.0 applications like AJAX and RIA both use much more complex client side architectures with heavy active content driven by client side programming languages such as JavaScript and ActionScript, making significantly difficult for black box scanners to crawl application effectively. Crawling is no longer simple like parsing or searching HTML for links and recursively or iteratively repeating the steps with no duplicate links. Advanced black box scanners sometimes integrate browser engines to overcome some of the issues but even then crawling fails in many cases or remains incomplete.
2) Protocol challenges - Add to the fact that there are many other richer protocols (than simple HTTP GET/POST with name value pairs) used by modern applications for communication between client and server such as Web Services, XML, JSON and AMF. Black box scanners must understand these protocols and craft requests keeping structural semantics of protocol intact in order to be able to proceed.
3) Right data challenges - For black box scanners to test effectively it is important to come up with both good input data as well as ability to craft proper fuzzed data. In any application if the input data is not proper then the underlying validation logic may prevent the actual business logic which is often much deeper from running by rejecting input as incorrect. Crafting the right combination of input data to find deeper faults is extremely difficult by guess work. The inputs should not only be with proper data types but also with proper data values and in proper relation to one another, reference data and in context of the functionality. Although advanced black box scanners have lot of heuristics built in to come up with data, it is impossible to be able to guess right input data or craft properly fuzzed data in all scenarios and perform deep analysis or uncover complex issues.
4) Training Mode - Black box scanners often provide a train mode when they are unable to overcome crawling challenges or right data challenges. In this mode a user guides black box scanner by using the application normally by going over the functionalities via a browser whose requests and responses are recorded by black box scanner thus overcoming some of the challenges. But even with additional human effort this approach cannot increase accuracy of black box scanners beyond a certain point.
5) No visibility into the internals of the application - This is the biggest limitation of black box scanners and a dead end when it comes to trying to increase accuracy beyond a certain point. Without any knowledge of the internal design or implementation of an application black box scanners cannot ensure that all areas of application logic are covered or determine complex states in which vulnerability will manifest itself. They have difficulty even in completely finding all entry points to the application. As a result black box scanners give high false negatives and also sometimes give false positives. The fundamental principle on which they work cannot guarantee full coverage or high accuracy.

However, black box scanners provide a relatively easier starting point for security vulnerability detection as they typically only require URL and sample credentials. Also, because they interact with a real deployed application, the results are reflective of both the logic of application as well as configuration of application which is an advantage as they can demonstrate existence of a flaw often with concrete evidence and precise steps for reproducing them.

A black box approach at some point has to rely on guesswork, trial and error or brute force which 1) is not an efficient approach to solve the problem 2) can quickly become prohibitive because of large number or permutations and combinations required in determining correct state for detecting vulnerabilities.

### 2) Static Application Security Testing (SAST) - White Box Approach

In a white box approach, analysis of application is performed by having full knowledge of internals of the application. Static analysis is a form of white box approach which analyzes application software and configuration information without actually executing or running the application. Such type of analysis when done by automated tools for finding security vulnerabilities is also called static application security testing or SAST. While it is much easier to perform manual analysis on application source code, static analyzers can choose to perform analysis on application source code or application byte codes / binaries.

A static analysis approach is similar to a mechanic who is allowed to open the hood and check all internal components of a car. However, because the analysis is static, run-time checks like actually starting the car and observing components in motion are not allowed. A doctor having results of internal tests such as blood test of a patient but not having ability to check the patient externally for tests such as measuring blood pressure or heart beat would also be equivalent of performing a static analysis.

Static analysis has certain clear advantages because of access to source code (or byte code / binaries) and configuration information. It can determine several things easily and effectively such as if particular API's (like unsafe API's) have been used or not by an application. Static analysis is a logical starting point towards analyzing internal implementation of an application.

A static analyzer attempts to work in much the same way as software person trying to find vulnerabilities in an application by reading and analyzing source code (or byte code / binaries) and configuration information. It also has ability to perform automated tests.

Static analyzers usually have to perform following steps:
1) A static analyzer choosing to read source code usually performs the following
   The first step is lexical analysis (implementation is called lexer) which converts sequence of characters in the source code into a sequence of tokens. The next step is syntactic analysis or parsing (implementation is caller parser) which is the process of analyzing sequence of tokens coming in from lexer and determining its structure by checking against the formal grammar of the language. The output of the parser is a parse tree which represents the detailed syntactic structure as per the formal grammar. The parse tree is often transformed to an abstract syntax tree which represents the abstract syntactic structure of the source code. The abstract syntax abstracts away things existing purely for grammatical reasons and represents a more logical structure of language than the syntax tree which represents grammatical structure. The next step is semantic analysis which ensures that the program composed of abstract syntax trees from multiple source codes containing types, variables and functions is properly defined and together they express a program which makes sense. Tracking type, variable and function declarations and usage by performing symbol resolution and proper type checking is an important part of this process. Further, for strongly typed languages it also ensures that every variable and expression has a type and its usage is correct and compatible as per the type system. The type system of the language is at the heart of strongly typed languages. In order to perform semantic analysis all of the interdependent sources would have to be loaded and checked. In addition, if there is usage of any libraries already compiled to byte codes / binaries by application the usage would have to be checked and verified as well. Whereas, the syntactic analysis only checks that the tokens coming are syntactically correct the semantic analyzers ensures that the program semantics itself makes sense.
   The end result of this process is ability to have an accurate model (representation) of a program which is resolved and represents all the components such as types, fields and methods making up the program.
2) A static analyzer choosing to read byte codes / binaries usually performs the following
   The first step is reading the application byte codes or applications binaries. For applications written in languages such as Java and C# which are typically compiled down to an intermediate language targeting a virtual machine and having ability to run on multiple platforms, the static analyzer needs to be able to read byte codes. For applications written in languages such as C and C++ which are typically compiled to final machine code targeting actual processors such as x86, x64 and ARM, the static analyzer needs to be able to read binaries. Byte codes representing intermediate language contain nearly as much type, field and method information and signatures as the higher level source code although comments are missing. The primary difference is that while method implementation in source codes is written using statements and expressions, in byte codes it is made up of virtual machine instructions. However both should be semantically same. An instruction is composed of opcode and operand(s) if any. The first step is much like a disassembler except that the output is similar to an abstract syntax tree although much simpler as statements and expressions are replaced by virtual machine instructions. Also generating a human-readable assembly language form is not necessary. The next step is similar to semantic analysis of source codes which ensures that the program composed of abstract syntax trees from multiple byte codes containing types, variables and functions is properly defined and together they express a program which makes sense. However, because the compiler has already performed all the checks during compilation process, performed implicit to explicit conversions and fully resolved the components and removed ambiguity (example created fully qualified type names), this step is relatively easier. Like source code, resolution and proper type checking is also an important part of this process. In order to perform this step the static analyzer loads and links (verifies and resolves) all of the interdependent byte codes making up the program. This also includes checking usage of any libraries by application. However, codes in binary form do not contain rich type information as available in byte codes and also have more complex and variable length instruction sets. The end result of this process is ability to have an accurate model (representation) of a program which is resolved and represents all the components such as types, fields and methods making up the program.
3) Control Flow Analysis - The next step is performing control flow analysis which requires building a control flow graph. It is a graph (made up of nodes and directed edges) representing all paths that a program can possibly take. In order to build a control flow graph the code is divided into basic blocks which are fragments of code composed of straight-line sequence of instructions without any jumps. The nodes in control flow graph are represented by basic blocks and the directed edges are represented by the jumps to other basic blocks. The directed edges can represent unconditional or conditional branching as well as loops. Any advanced static analyzer should not only be able to perform analysis within a function but also perform analysis across function calls. As a result, a call graph also needs to be built. It is a graph (made up of nodes and directed edges) representing relationship between various functions in a program. The nodes in call graph are represented by the functions and directed edges are represented by function calls.
4) Dataflow Analysis - A data flow analysis looks at possible set of values / data computed at various points of program. By traversing through the control flow graph and call graph it looks as how data is created, moved and consumed.
5) Taint Analysis - A taint analysis looks at various data flows to examine how a data coming from user (or potential attacker) moves through the application. The input data (source) is marked as tainted (suspect) and as the data moves an analysis is performed to see how the data has been processed or validated before being consumed by critical parts of the system (sinks).
6) Model Checking - A model checking checks if the model of a finite-state system has problems by checking it against a specification representing a requirement (for example resources such as database connections, input/output streams must be closed after use).
7) Analysis Algorithms - In order to perform control flow and dataflow analysis various analysis algorithms like type system analysis (to limit possible values based on types permissible on an operation), constraint solving (to find limited possible values and states based on constraints imposed), theorem proving and other algorithms are used but even after using these algorithms or because of practical limitations (such as finite computing, time and memory resources available) with them, it remains very difficult for static analyzers to perform accurate analysis in many cases. As a result, because of various limitations, static analyzers often have to rely on approximate solutions such as abstract interpretation which reduces the difficulty for analyzers but at the cost of less precise analysis.
8) Rules - Static analyzers have built in rules to find vulnerabilities. The rules are represented differently for different types of analysis. For example, for a taint analysis, static analyzes may have list of sources and sinks. Data originating from a source and ending up in a sink without validation may mark existence of vulnerability.

The above is only a general description of what static analyzers usually have to perform. However, even the above steps can be performed with wide varying degree of accuracy which can result in drastically different results. Static analyzers can vary considerably in sophistication. For example a static analyzer which does not perform semantic analysis of source code with nearly as much precision as a compiler, will have considerable difficulty in producing accurate results. Specification of modern languages like Java, C# (having rich type system including generics) as well as virtual machines are detailed and have to be implemented with precision by static analyzer which is not a trivial task.

The initial steps of static analyzers are nearly identical to compilers. Static analysis borrows a lot from compiler science which has been around for decades.

Although static analysis is a very important concept and a must for any serious analysis of application, there are many issues and limitations with current static analyzers. They produce lot of noise often causing lot of frustration with the results. There are several reasons for this as mentioned below:
1) In absence of very advanced logic required for performing accurate analysis beyond the state of the art and in some cases even practical limitations (static analysis is still an evolving science and advanced analysis which can generate very accurate results is an extremely difficult scientific problem), static analyzers start making many assumptions along the way. As the analysis on a given path progresses the cost of making false or unproven assumptions starts growing exponentially and static analyzers end up generating large amounts of noise.
2) Even after using analysis algorithms, branching, variable number of looping, virtual function calls (such as functions of interfaces or virtual functions of classes), function pointer calls, delegate calls and other complexities can result in exponential growth of possible paths and combinations making it very difficult for static analyzers to perform accurate analysis.
3) Modern applications written in object oriented languages often use reflection or make heavy use of frameworks with model-view-controller, dependency injection and other types of patterns which can make it very challenging for static analyzers to perform accurate analysis. Although static analyzers try to overcome some of the framework related issues by reading configuration information used by the frameworks and try to mirror semantically identical behavior during analysis (as the framework would have performed during actual execution) it is not always effective.
4) Even after using analysis algorithms, static analyzers continue to face considerable challenges and limitations in determining accurately if logic between source and sink represents validation or not and whether that validation is sufficient or not. This can result in large number of false positives if static analyzer on safer side decides to mark it as potentially vulnerable. Some static analyzers rely on users to mark certain functions as safe introducing critical dependency on human skills in analysis and along with it chances of error.

### 3) Hybrid Approach

A hybrid approach is a simple concept of combining results from both black box DAST analyzer and white box SAST analyzer and attempting to correlate findings. This approach is also called gray/grey box because it combines black box and white box.

A hybrid approach is similar to two mechanics who, after performing equivalent of black box DAST analysis and white box SAST analysis separately on a car, create a common report from findings of both analysis results and also try to correlate the results.

The motivation for combining results from the two approaches is obvious. It gives larger set of results and correlation helps in improving visibility and thus helps in remediation of vulnerability. However, the real gain in overall findings is not a simple sum of findings by the two approaches but more accurately a superset, which is, sum of both findings minus the number of common/correlated findings. Further, due to limitations of correlation logic and inability to correlate all common findings there may still be duplicate findings across both DAST and SAST analyzers for same vulnerability in the report. Also, since both DAST and SAST analyzers generate false positives, a sum of those undesirable results is inherited as well.

Combining results of DAST and SAST analyzers in order to report vulnerabilities missed by the other analyzer reduces false negatives to an extent but false positives are inherited as well.

The basic principle behind hybrid approach is to correlate results of DAST and SAST analyzers in an attempt to give better visibility. DAST analyzers can only show flaws externally as request/response (input/output) with no internal insight while SAST analyzers mostly show flaws internally (code level) lacking ability to reproduce the flaws externally. Thus, attempting to correlate results of the two types of analyzers makes sense as it can show a vulnerability both from outside as well as from inside hence giving a better picture and helping developers in remediation process. While the concept of hybrid analysis looks good in theory, in reality there are many problems as explained below:
1) Correlation itself is not a solution to the problem of finding vulnerabilities accurately. Correlation simply cannot overcome fundamental limitations or deficiencies of the analyzers including vulnerabilities missed by both the analyzers. It is not possible to show vulnerabilities by simple correlation beyond the at best sum (or more accurately superset) of the results of two approaches. The only way to truly improve results is by improving accuracy of the analyzers. Correlation is only a mechanism to overcome the visibility limitations of both types of approaches by giving a unified view of vulnerability.
2) If correlated vulnerabilities are given higher priority over vulnerabilities that are not correlated while reporting or fixing them, it can prove risky. Correlation is not same as severity or exploitability. Simply because vulnerabilities could not be correlated does not necessarily make them less severe or false positive. There are many high severity vulnerabilities that can only be found by one type of approach. Relying on correlation as an indication of severity, exploitability or remediation priority can give a false sense of security.
3) While performing correlation to improve visibility looks good in theory, in reality the way it is implemented technically has its own limitations. In order to correlate results of DAST and SAST analyzers a common element is needed which can be used to bind the two types of findings. Usually this common element is URL or request. While DAST findings always have a URL, translating SAST findings (source code) to URL can turn out to be both difficult and imprecise. First the URL to source mapping techniques used by different frameworks can vary widely. In order to be able to create URL to source mapping, different implementation is required for every type of framework and challenges associated with mirroring exact behavior of frameworks for deriving proper URL to source mapping can result in inaccurate or incomplete correlation. In addition, DAST findings and SAST findings are not one to one. Because DAST approach looks at symptoms many DAST findings (symptoms) can point to same SAST finding (root cause). Also an application may have different logic based on different values coming from a URL or request in which case, a signature of URL or request without value is not an indication of same logic and cannot be considered as a perfect correlation element.

Besides combining the results and correlating them, hybrid approach also attempt to improve the dynamic coverage of DAST scanner by giving hints to DAST scanner about additional entry points that it may have missed. The basic idea is that since SAST analyzer has access to pages and also configuration information used by frameworks (for URL to source mappings) it makes sense to give hints to DAST scanner about these entry points in case it missed them. Again, while this looks good in theory and indeed can improve the surface area for DAST scanner to check, in reality the technical challenges can make the gains marginal. Firstly, this approach and the results are dependent on the type of framework being used by the application. Secondly, simply passing new URLs without proper values and context does not give enough information to DAST scanner for performing proper analysis.

Hybrid is a shortcut approach of trying to combine results of both the DAST and SAST analyzers in an attempt to get more results rather than fundamentally attempting to improve accuracy. The real gains are often marginal and it also introduces its own set of problems.

### 4) Hybrid 2.0 Approach

A hybrid 2.0 approach is an approach taken to overcome some of the limitations faced by hybrid approach. It is a natural evolution to the next logical way of improving the vulnerability detection mechanism which originally started as separate black box DAST approach and white box SAST approach.

Hybrid 2.0 works on the same principle which has already been used in so many other fields to help find problems or warn about problems. The basic concept is to improve internal visibility into a system so that it is possible to see the actual underlying problem rather than the symptoms.

The auto industry like many other fields provided long ago a simple solution to find or warn about at least some of the problems with a car. The idea is to put sensors at critical points (for example a sensor measuring engine oil temperature) and send the signal to dashboard so that a driver can see engine temperature by simply looking at temperature meter on the dashboard or see a warning light turn on if temperature exceeds beyond a critical threshold. This is far better than a black box approach in which none of the sensors or meters showing state of internal components would exist. It is far better to get an early warning by temperature meter indicating an overheating of engine than waiting for smoke to come into the cabin. A car also has many other sensors and meters. RPM meter shows if the engine is rotating or not and speed at which it is rotating. Battery sensor (measuring voltage or current flow in amperes) detects if a battery is charging properly or not from the alternator and is helpful when troubleshooting some of the electrical problems. An oxygen sensor in a car determines if the fuel/oxygen mixture is rich or lean. Fuel sensor detects amount of fuel in tank. Modern cars are even much better than this. They have On-Board Diagnostics or OBD computer which is a microcomputer taking input from various sub-systems and giving a warning to user by illuminating a malfunction light when something goes wrong. Some cars also have a digital communications port in cabin. A mechanic can plug in a computer into this port and quickly see trouble codes which can help in rapidly identifying problems in a car without necessarily opening the hood.

While these approaches do improve detection of problems and hence improve accuracy, they are not a replacement for performing white box (or a detailed part by part inspection). That is because sensors can only sense certain points of the system. A loose nut on a chassis or cracks or complex electrical or mechanical issues can only be detected by detailed inspection.

The exact same concept is used in medical field, industrial plants and so many other fields.

A doctor who wants to check a patient for cardiovascular problem may ask the patient to go through a stress test by exercising on a treadmill. In a black box only approach the doctor can only inspect the patient externally via external instruments like blood pressure meter, stethoscope or see external symptoms like patient running out of breath or sweating. However, when the patient is connected via sensors (electrodes) for measuring internal activity with an electrocardiogram (ECG or EKG) machine, the doctor can get far better information otherwise not possible externally.

Hybrid 2.0 takes exactly the same approach and the reason is obvious. It is well known that one of the major limitations of black box DAST scanner is not having internal visibility so it is natural to try to overcome this limitation by using same concept used in other fields to solve such problem. Instead of looking at response or output of the application (which may or may not give clues about a problem), it is better to see what is happening inside at the actual point of impact, so by placing sensors at point of impact it becomes easy to get information from the root rather than relying on symptom. A good example is SQL injection detection. Rather than relying on application sending back a symptom of SQL injection attack (In fact if an application catches all exceptions and only gives generic message there will be no symptoms shown directly. This is called Blind SQL injection), it is better to see the actual query being sent to database by looking at query string passed to a point of interest which can be "Statement.executeQuery(...)" function in this case. This is exactly similar to previously mentioned example of having a temperature sensor in a car measuring a point of interest (engine oil temperature) and passing the information out rather than waiting for smoke to come into the cabin which may not even happen if the cabin is seal tight.

Hybrid 2.0 approach works by putting sensors at various points. Many implementations may take an easier route of putting sensors not within application themselves, but at beginning of method implementation of libraries containing functions (with predefined signatures) which need to be tracked for possible function calls by the application. Example of predefined source and sink functions are "Request.getParameter(...)", "Statement.executeQuery (...)". The values (for example parameter name, query string) can be easily obtained from the argument of interest. Because it is also important to know from where the call was made by the application, basic implementations may use simple stack trace printing mechanism built into the platform. The stack trace contains a trace of function calls that are being executed by the virtual machine at a point in time up to the library function call on which the sensor was placed. This is a simple shortcut approach, however as with many shortcut approaches there are many limitations as well. Some implementations may decide to use built in instrumentation support of the platform / virtual machine itself in which case instrumentation hooks are places on virtual machine to observe the execution of the application. Moreover, some implementations may also decide to put sensors beyond application server boundary, such as database server or operating system to capture different information.

All information captured by sensors is sent to DAST scanner (actually the DAST scanner can no longer be called black box because it gets internal information). The scanner uses this information also instead of relying solely on final response or output in order to detect vulnerability. Additionally, it can even point to the location of source code from where the calls were made thus helping with remediation effort. As the scanner receives internal information like SQL queries it can improve its vulnerability detection logic which also results in some reduction in number of requests it would have to generate by detecting vulnerabilities more easily. There is also a benefit in using stack trace from sensors for correlation. Because the source code information is available in the trace it can be used to correlate DAST findings with findings of SAST scanners by matching against results generated from SAST having same source code and line number. This is an improvement over URL based approach.

The basic principle of Hybrid 2.0 approach of having sensors placed at different points internally in a system to capture internal information and send it out is a well-known concept (art) that has been used for decades in so many fields such as automobile and medical instrumentation.

While Hybrid 2.0 is a much better approach over pure black box approach and the way correlation is performed is also an improvement over hybrid approach there are still several shortcomings as mentioned below:
1) Hybrid 2.0 additionally uses sensors to send information to black box scanners while a test is happening. This is a certainly an improvement over purely relying on response or output for finding problem. However, simply introducing sensors and shifting visibility point to certain locations cannot guarantee comprehensive coverage or high accuracy. For example even though a Hybrid 2.0 may put sensor to detect certain source and sink function calls the entire application logic in between is still black box for the scanner. Sensors can only solve some part of the problem and are not replacements for white box analysis.
2) Hybrid 2.0 performance improvement is limited by the number of sensors and the type of information they can send. Moreover, having predefined known signatures for sensing the function calls limits the findings only to those related with the signatures.
3) Hybrid 2.0 heavily relies on run-time monitoring of application using sensors while a test by DAST scanner is happening. A sensor sends information to DAST only when a call has actually been made. If a sink function is not called because of some complex logic blocking flow between source and sink functions then the scanner cannot detect vulnerability. The exact payload required to get to all possible parts of code can be very challenging.
4) Hybrid 2.0 approach has improved correlation mechanism than hybrid approach. However, as described in Hybrid approach section, correlation itself is not a solution to the problem of finding vulnerabilities accurately.
5) Hybrid 2.0 approach has improved feedback mechanism in real-time to improve dynamic coverage including detecting hidden parameters. However, as described in Hybrid approach section, proper values and context are also needed by dynamic scanners which may not be easy all the time.
6) Hybrid 2.0 approach cannot bring any improvement to analysis of code which it is unable to cover from DAST scanner and at best can report only the same SAST scanner findings in those cases.

Hybrid 2.0 approaches also mention possible use of concolic testing to improve code coverage and improve analysis. While concolic testing can perform both concrete execution with symbolic execution and has several advantages, there are also several challenges with theorem proving or constraint solving on complex modern applications. A number of factors may lead to poor coverage, including imprecise symbolic representations, incomplete theorem proving and failure to search the most fruitful portion of a large or infinite path tree. Additionally, concolic testing cannot get past functions which generate large symbolic representations. There cannot be any gains on paths which concolic testing is unable to reach.

Thus, there are many limitations of current approaches and significant amount of human effort is needed to find additional vulnerabilities missed by these approaches (false negatives) and/or filter genuine vulnerabilities from reported ones (false positives).

### OBJECTS OF INVENTION

The main object of the present invention is to have a novel application analysis system that provides a platform for accurately analyzing applications which is useful in finding security and quality issues in an application by having the present invention composed of an advanced fusion analyzer which gains a detailed understanding of the application behavior by using a novel multi-way coordination and orchestration across components used in the present invention to build and continuously refine a model representing knowledge and behavior of the application as a large network of objects across different dimensions and using reasoning and learning logic on this model along with information and events received from the components to both refine the model further as well as drive the components further by sending information and events to them and again using the information and events received as a result to further trigger the entire process until the system stabilizes.

### DESCRIPTION OF INVENTION

The present invention describes a novel application analysis system providing a platform for accurately analyzing applications which is useful in finding security and quality issues in an application.

At the core of the present invention is an advanced fusion analyzer which gains a detailed understanding of the application behavior by using a novel multi-way coordination and orchestration across components used in the present invention to build and continuously refine a model representing knowledge and behavior of the application as a large network of objects across different dimensions and using reasoning and learning logic on this model along with information and events received from the components to both refine the model further as well as drive the components further by sending information and events to them and again using the information and events received as a result to further trigger the entire process until the system stabilizes.

The definition of certain terms used above is as follows:
"fusion analyzer" - The word "fusion" in general means "The process or result of joining two or more things together to form a single entity:". Since the analyzer responsible for coordinating and orchestrating other analyzers (components) provides a synergistic capability which is greater than the sum of capabilities of individual analyzers (components) by "fusing" (process of joining) the analysis capabilities (of components) together, it is called as "fusion analyzer".
"components' - The term "components" when used within context of fusion analyzer during multi-way coordination and orchestration process refer to analyzers that participate in multi-way coordination and orchestration process by providing analysis capabilities. These components are mentioned in "analysis without running application" and "analysis with running application" sections when describing multi-way coordination and orchestration process.
"trigger the entire process" - The term "process" refers to multi-way coordination and orchestration process of refining the multi-dimensional model. Thus, the term "trigger the entire process" means "trigger the entire process of refining the multi-dimensional model using multi-way coordination and orchestration across components".
"until the system stabilizes" - The term "until the system stabilizes" means "until no more refinement of multi-dimensional model is observed using multi-way coordination and orchestration across components". Because the multi-way coordination and orchestration is an iterative process, it is continued until no further information or events are received from the components to refine the model further or drive the components further (again for any possible refinement of the model). Thus, the process ends when no further refinement of multi-dimensional model is possible. This ensures that all the facts and assumptions that can be gained from coordination across the components are known (captured).

A system for providing a platform for analyzing applications with multi-way coordination and orchestration, the system comprising
- advanced fusion analyzer comprising
   - using multi-way coordination and orchestration across components for analyzing application;
   - building and continuously refining a multi-dimensional model representing knowledge and behavior of the application as a network of objects across different dimensions;
   - using reasoning and learning logic on this model along with information and events received from the components to both refine the multi-dimensional model further as well as drive the components further by sending information and events to them;
   - again using the information and events received from the components as a result of driving the components to further trigger the entire process until the system stabilizes;
- static analyzer component comprising
   - participating in multi-way coordination and orchestration process with advanced fusion analyzer;
   - performing analysis on source codes as well as byte codes or binaries;
   - processing of source code comprising
      - performing lexical analysis and syntactic analysis of source codes resulting in parse tree and then transforming the parse tree to abstract syntax trees;
      - performing semantic analysis comprising
         - ensuring that the program composed of abstract syntax trees from multiple source codes containing types, variables and functions is properly defined and together they express a proper program;
         - tracking type, variable and function declarations and usage by performing symbol resolution and proper type checking;
         - ensuring that for strongly typed languages, every variable and expression has a type and its usage is correct and compatible as per the type system;
         - loading and checking all interdependent source codes making up the program;
         - checking and verifying the usage of libraries by application;
   - processing of byte codes or binaries comprising
      - reading byte codes for application which is compiled to an intermediate language and transforming to abstract syntax trees;
      - reading binaries for application which is compiled to final machine code resulting and transforming to abstract syntax trees;
      - performing semantic analysis comprising
         - ensuring that the program composed of abstract syntax trees from multiple byte codes containing types, variables and functions is properly defined and together they express a proper program;
         - tracking type, variable and function declarations and usage by performing symbol resolution and proper type checking;
         - loading and linking all interdependent byte codes making up the program;
         - checking and verifying the usage of libraries by application;
   - resolving application available in pure source form, pure byte code or binary form or a mix of both source and byte code or binary form using a mixed resolver;
   - resolving all dependent libraries;
   - performing the lexical analysis, syntactic analysis, reading of byte codes or binaries, semantic analysis following language specification and virtual or real machine specification;
   - representing application as a model which is resolved and represents all the components of the application such as types, fields, methods making up the application including all dependent libraries;
   - performing control flow analysis by building a control flow graph and call graph;
   - establishing facts as required by using language specification and virtual or real machine specification along with resolution and types;
   - representing the model of the application to advanced fusion analyzer as facts;
   - performing dataflow analysis as required;
   - performing taint analysis and model checking whenever requested by advanced fusion analyzer;
   - performing type system analysis or using constraint solving, theorem proving or other approaches to establish additional facts as required;
   - passing analysis results to advanced fusion analyzer;
   - performing analysis whenever requested by advanced fusion analyzer;
- dynamic simulator component comprising
   - participating in multi-way coordination and orchestration process with advanced fusion analyzer;
   - modeling behavior or outcomes of different parts of logic;
   - simulating part of logic which can be a portion of a function, a complete function or span across multiple functions;
   - simulating functions which can be static, instance or virtual;
   - simulating values which can be primitives, strings, objects, references, pointers or symbolic values;
   - simulating part of logic in a given context whenever requested by advanced fusion analyzer;
   - controlling the environment to avoid logic exceeding predefined execution time and memory usage threshold;
   - accepting parts of logic which need to be simulated from advanced fusion analyzer;
   - passing the simulation analysis results to the advanced fusion analyzer;
- dynamic emulator component comprising
   - participating in multi-way coordination and orchestration process with advanced fusion analyzer;
   - modeling behavior of different components of the application;
   - using a virtual machine for performing emulation of components of the application in isolation;
   - emulating component of the application which can be a portion of a function, a complete function or span across multiple functions;
   - emulating functions which can be static, instance or virtual;
   - emulating values which can be primitives, strings, objects, references or pointers;
   - emulating component of the application in a given context whenever requested by advanced fusion analyzer;
   - creating an environment around the component of the application using dynamic byte code generation;
   - performing analysis of component of the application before execution for ensuring that the component of the application can work in isolation by verifying that there are no missing dependencies;
   - controlling the environment to avoid component of the application exceeding predefined execution time and memory usage threshold;
   - accepting components of the application which need to be emulated from advanced fusion analyzer;
   - passing the emulation analysis results to the advanced fusion analyzer;
- configuration analyzer component comprising
   - analyzing configuration files used by application server running the application and frameworks used by the application;
   - reading the configuration files and creating a model representing the configuration information;
   - performing configuration analysis based on type of analysis requested by advanced fusion analyzer;
   - passing the configuration model and analysis results to the advanced fusion analyzer;
- instrumentor component comprising
   - instrumenting the application in order to capture the run-time information of the application when the application is executing in a real environment;
   - generating an enhanced byte code or binary based on instrumentation;
   - placing number of observers at points determined during analysis without running application such that whenever requested by advanced fusion analyzer information, both at instruction level as well as at flow level, can be captured when the application is running;
   - placing modifiers at points determined during analysis without running application if required such that whenever requested by advanced fusion analyzer actual flow of application can be altered or stopped or data can be changed;
   - instrumenting only through the static analysis model and uniquely mapping instrumented points within the static analysis model;
   - performing instrumentation as per the instructions of advanced fusion analyzer which decides based on coordinated analysis before instrumentation process which points of application need to be instrumented allowing advanced fusion analyzer to analyze the application and instrument only the points which help in gaining new facts further;
- internal run-time analyzer component comprising
   - participating in multi-way coordination and orchestration process with advanced fusion analyzer;
   - capturing run-time information, both at instruction level as well as at flow level, of the application from number of observers placed during instrumentation process;
   - capturing the instructions as points which directly map into the static analysis model in advanced fusion analyzer instead of capturing information as instructions with associated signatures;
   - providing compact and fast information transfer by capturing the instructions as points and directly mapping into the static analysis model in advanced fusion analyzer;
   - avoiding costly resolution process by capturing the instructions as points and directly mapping into the static analysis model in advanced fusion analyzer;
   - capturing information as events where an event is represented as a pair of point, either 32 bit or 64 bit, and objects, representing values as applicable;
   - separating events per thread for use cases which are multi-threaded;
   - providing on-demand transfer of values further compacting and improving performance by only transferring values required during analysis;
   - passing primitive and string values as is and passing other reference and pointer values as markers along with address or hash code computed from address;
   - providing on-demand remote object comparison of reference or pointer values whenever requested by advanced fusion analyzer;
   - providing on-demand remote object drilldown into an array or object whenever requested by advanced fusion analyzer;
   - providing on-demand remote object analysis of an object, such as determining run-time type of an object, whenever requested by advanced fusion analyzer;
   - changing data or altering or stopping flow of application using corresponding modifier as instructed by advanced fusion analyzer;
   - moving into standby mode when not in use and activated by advanced fusion analyzer only when needed, such as during explicit external test around request and response boundary;
   - taking complete remote snapshot of all run-time information captured for a particular test by making copy of the events captured whenever requested by advanced fusion analyzer;
   - comparing events of different remote snapshots for different test cases in order to determine changes in flow and other information;
- external run-time analyzer component comprising
   - participating in multi-way coordination and orchestration process with advanced fusion analyzer;
   - performing external tests on application;
   - performing automated guided testing comprising
      - performing http based automation comprising
         - using a starting point received from advanced fusion analyzer for creating initial http request;
         - sending http request and receiving http response;
         - parsing http request and http response with protocol analyzer;
         - sending http request structure and http response structure to advanced fusion analyzed for analysis;
         - performing further test if requested by advanced fusion analyzer;
         - using html and java script analysis to crawl further functionality;
      - performing browser based automation comprising
         - using a starting point received from advanced fusion analyzer for creating initial browser based request;
         - positioning browser state;
         - performing action on browser;
         - waiting for browser state to refresh;
         - analyzing browser document object model before and after;
         - sending analysis results to advanced fusion analyzed;
         - performing further test if requested by advanced fusion analyzer;
         - using document object model analysis to crawl further functionality;
      - performing user guided testing comprising
         - waiting for user to go over functionality and provide right input data;
         - performing further test if requested by advanced fusion analyzer;
      - monitoring and analyzing automatic guided testing and user guided testing comprising
         - intercepting http request and http response by proxy;
         - parsing the http request and http response with protocol analyzer;
         - sending the http request structure and http response structure to advanced fusion analyzed for analysis;
         - performing automatic modification of payload when retest is requested by advanced fusion analyzer using protocol analyzer which in turn works with proxy for altering the information during transit;
         - notifying advanced fusion analyzer of request and response boundaries;
- logical view with guide paths component comprising
   - performing flow summarization at entire use case level or at individual attribute or value level;
   - marking guide paths based on use case level analysis or based on attribute or value level analysis;
   - converting information to language neutral format;
   - presenting logical view with guide paths information as higher level summary flowchart representing internal logic of application along with analysis and paths for guidance which can be used by user testing for driving new tests;
   - passing logical view with guide paths information to fusion analyzer which can be used by automated testing for driving new tests;
- fusion analyzer coordination comprising
   - performing multi-way coordination and orchestration across components;
   - accepting accurate modeling and precise analysis as facts from components and adding them to multi-dimensional model;
   - accepting imprecise analysis results along with assumptions from components and placing them in multi-dimensional model;
   - accepting reason when analysis is stuck and placing it in multi-dimensional model;
   - notifying other components capable of improving or which are stuck based on the new facts;
   - performing further analysis by using other components capable of performing analysis based on the assumption;
   - modifying assumption based on analysis and notifying component that made assumption;
   - performing guided path and guided value analysis in multi-way coordination and orchestration across components;
- components participation comprising
   - participating in multi-way coordination and orchestration process with advanced fusion analyzer;
   - perform on-demand analysis whenever requested by advanced fusion analyzer;
   - ensuring facts and assumptions are in different space;
   - passing accurate modeling and precise analysis results as facts to fusion analyzer;
   - passing imprecise analysis results along with assumptions made to fusion analyzer;
   - passing reason when analysis is stuck to fusion analyzer;
   - changing analysis state when assumption on which analysis relies is modified by fusion analyzer;
   - improving analysis or proceeding from stuck analysis when new fact related to analysis is reported by fusion analyzer;
- analysis without running application step comprising
   - separating the application by different platforms and languages;
   - invoking the static analyzer to a build a representation of application as a model which is resolved and represents all the components such as types, fields, methods making up the application including all dependent framework, platform and libraries;
   - taking the representation of the model of the application from static analyzer;
   - invoking configuration analyzer to build configuration model and perform initial analysis on configuration;
   - invoking static analyzer to run analysis during multi-way coordination and orchestration process;
   - invoking dynamic simulator for modeling behavior or outcomes of different parts of logic during multi-way coordination and orchestration process;
   - invoking dynamic emulator for modeling behavior of different components used by application during multi-way coordination and orchestration process;
   - performing multi-way coordination and orchestration process across static analyzer, dynamic simulator and dynamic emulator to build and refine the model representing knowledge and behavior of the application;
- instrumentation step comprising
   - invoking the instrumentor to instrument the application;
   - placing number of observers at points determined during analysis without running application;
   - placing modifiers at points determined during analysis without running application if required;
   - instrumenting only the points which help in gaining new facts further based on coordinated analysis before instrumentation process;
- analysis with running application step comprising
   - invoking external run-time analyzer for performing external tests and external analysis on application during multi-way coordination and orchestration process;
   - invoking internal run-time analyzer for capturing run-time information of the application from number of observers during multi-way coordination and orchestration process;
   - invoking internal run-time analyzer for altering or stopping flow of application or changing data with modifiers during multi-way coordination and orchestration process if required;
   - invoking static analyzer, dynamic simulator and dynamic emulator during multi-way coordination and orchestration process;
   - performing multi-way coordination and orchestration process across external run-time analyzer, internal run-time analyzer, static analyzer, dynamic simulator and dynamic emulator to build and refine the model representing knowledge and behavior of the application;
- rules and reporting step comprising
   - using rules to further drive the components;
   - creating report containing findings and summary based on the analysis performed.

In the above description, the meaning of terms "accurate" and "precise" is "proven" or "exact" (for example using "mathematical" or "scientific" analysis) and meaning of term "imprecise" is "not-proven" or "approximate" (for example using "heuristic" analysis).

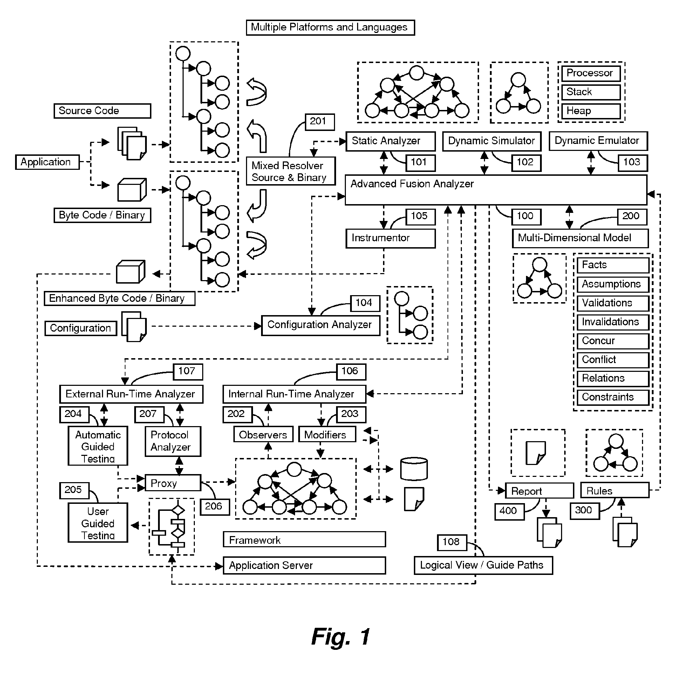

Fig. 1 shows the higher level diagram of fusion design, process and components.

### BRIEF DESCRIPTION OF DRAWINGS

- Fig. 1 :: Higher Level Diagram of Fusion Design, Process and Components

### Meaning of reference numerals used in Fig. 1 is as below:

- 100 :: Advanced Fusion Analyzer
- 101 :: Static Analyzer
- 102 :: Dynamic Simulator
- 103 :: Dynamic Emulator
- 104 :: Configuration Analyzer
- 105 :: Instrumentor
- 106 :: Internal Run-Time Analyzer
- 107 :: External Run-Time Analyzer
- 108 :: Logical View with Guide Paths
- 200 :: Multi-Dimensional Model
- 201 :: Mixed Resolver for Source and Byte Code/Binary
- 202 :: Observers
- 203 :: Modifiers
- 204 :: Automatic Guided Testing
- 205 :: User Guided Testing
- 206 :: Proxy
- 207 :: Protocol Analyzer
- 300 :: Rules
- 400 :: Report
- Fig. 2a to 2c :: Static Analyzer Process Flow
- Fig. 3 :: Dynamic Simulator Process Flow
- Fig. 4 :: Dynamic Emulator Process Flow
- Fig. 5 :: Configuration Analyzer Process Flow
- Fig. 6a and 6b :: Instrumentor Process Flow
- Fig. 7a and 7b :: Internal Run-Time Analyzer Process Flow
- Fig. 8a to 8d :: External Run-Time Analyzer Process Flow
- Fig. 9 :: Logical View with Guide Paths Process Flow
- Fig. 10a to 10d :: Fusion Analyzer Coordination Process Flow
- Fig. 11 a to 11c :: Component Participation Process Flow

### COMPONENTS OF THE SYSTEM

### 1) Static Analyzer [101]

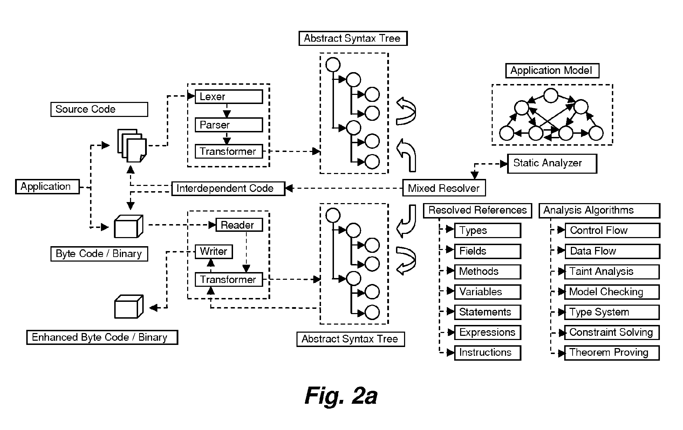

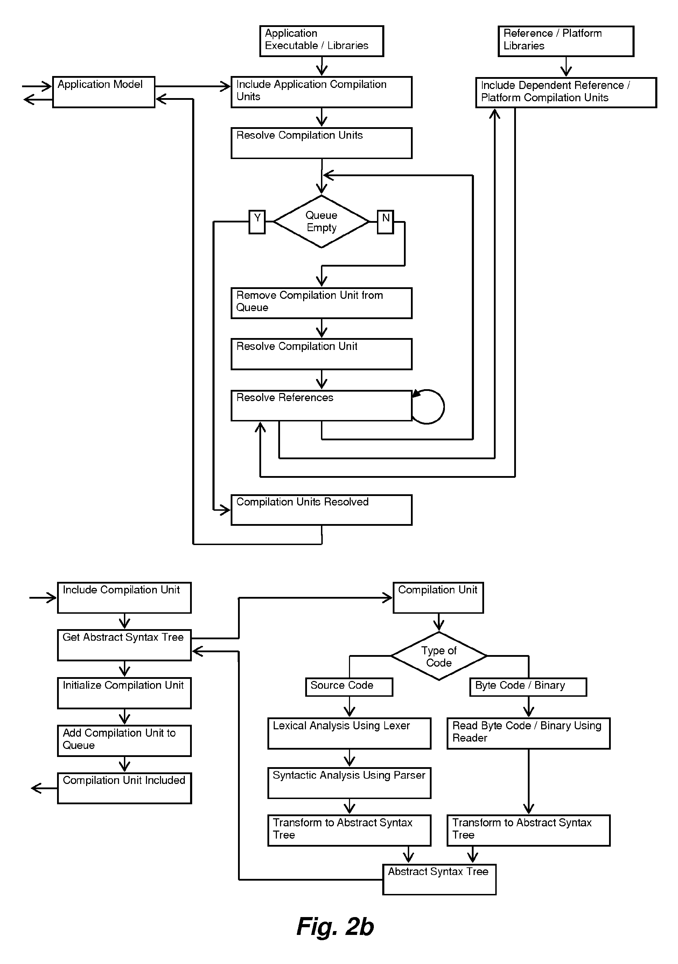

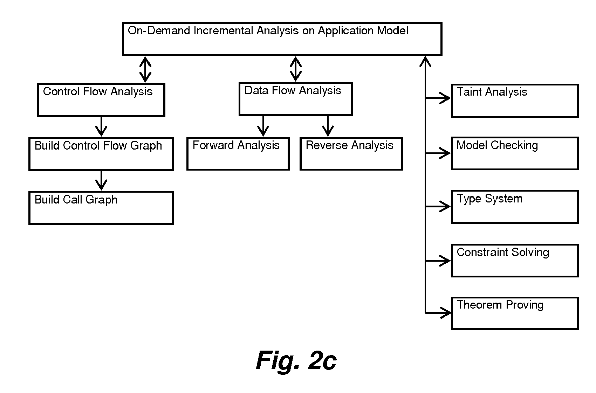

The static analyzer [101] of the present invention is used by advanced fusion analyzer [100] to perform analysis on source codes as well as byte codes / binaries. Fig. 2a to 2c show the process flow of the said static analyzer [101]. The description of the said static analyzer [101] is as follows

The said static analyzer [101] performs lexical analysis and syntactic analysis of source codes or reads byte codes / binaries both of which result in abstract syntax trees. The said static analyzer [101] then performs semantic analysis. The basic steps which are common for any static analyzer to perform these are as follows

For processing source code, following steps are performed
The first step is lexical analysis (implementation is called lexer) which converts sequence of characters in the source code into a sequence of tokens. The next step is syntactic analysis or parsing (implementation is caller parser) which is the process of analyzing sequence of tokens coming in from lexer and determining its structure by checking against the formal grammar of the language. The output of the parser is a parse tree which represents the detailed syntactic structure as per the formal grammar. The parse tree is transformed to an abstract syntax tree which represents the abstract syntactic structure of the source code. The abstract syntax abstracts away things existing purely for grammatical reasons and represents a more logical structure of language than the syntax tree which represents grammatical structure. The next step is semantic analysis which ensures that the program composed of abstract syntax trees from multiple source codes containing types, variables and functions is properly defined and together they express a program which makes sense. Tracking type, variable and function declarations and usage by performing symbol resolution and proper type checking is an important part of this process. Further, for strongly typed languages it also ensures that every variable and expression has a type and its usage is correct and compatible as per the type system. The type system of the language is at the heart of strongly typed languages. In order to perform semantic analysis all of the interdependent sources are loaded and checked. In addition, if there is usage of any libraries already compiled to byte codes / binaries by application the usage is checked and verified as well. Whereas, the syntactic analysis only checks that the tokens coming are syntactically correct the semantic analyzers ensures that the program semantics itself makes sense.

For processing byte codes / binaries, following steps are performed
The first step is reading the application byte codes or applications binaries. For applications written in languages such as Java and C# which are typically compiled down to an intermediate language targeting a virtual machine and having ability to run on multiple platforms, the static analyzer reads byte codes. For applications written in languages such as C and C++ which are typically compiled to final machine code targeting actual processors such as x86, x64 and ARM, the static analyzer reads binaries. Byte codes representing intermediate language contain nearly as much type, field and method information and signatures as the higher level source code although comments are missing. The primary difference is that while method implementation in source codes is written using statements and expressions, in byte codes it is made up of virtual machine instructions. However both should be semantically same. An instruction is composed of opcode and operand(s) if any. The first step is much like a disassembler except that the output is similar to an abstract syntax tree although much simpler as statements and expressions are replaced by virtual machine instructions. The next step is similar to semantic analysis of source codes which ensures that the program composed of abstract syntax trees from multiple byte codes containing types, variables and functions is properly defined and together they express a program which makes sense. However, because the compiler has already performed all the checks during compilation process, performed implicit to explicit conversions and fully resolved the components and removed ambiguity (example created fully qualified type names), this step is relatively easier. Like source code, resolution and proper type checking is also an important part of this process. In order to perform this step the static analyzer loads and links (verifies and resolves) all of the interdependent byte codes making up the program. This also includes checking usage of any libraries by application. However, codes in binary form do not contain rich type information as available in byte codes and also have more complex and variable length instruction sets.

Further, a mixed resolver for source and byte code/binary [201] allows complete resolution of application available in pure source form, pure byte code/binary form or a mix of both source and byte code/binary form. All dependent libraries such as platform, framework and other dependencies are automatically resolved.

Further, in order to be very accurate the said static analyzer [101] follows language specifications and virtual/real machine specifications with precision and detail. The end result of the analysis performed by the said static analyzer [101] is a representation of application as a very accurate model which is resolved and represents all the components such as types, fields, methods making up the application including all dependent framework, platform and libraries with as much precision as a compiler uses during compilation or a virtual/real machine uses during execution. The precision of the end result is essential as the present invention relies on the said static analyzer [101] to build a very accurate model with precise resolution and accurate types (rich type system including generics). The accuracy of model is important while establishing fundamental facts as per the specifications.

In addition, the said static analyzer [101] also performs control flow analysis by building an accurate control flow graph and call graph. The basic steps which are common for any static analyzer to perform these are as follows
A control flow graph is built for control flow analysis. It is a graph (made up of nodes and directed edges) representing all paths that a program can possibly take. In order to build a control flow graph the code is divided into basic blocks which are fragments of code composed of straight-line sequence of instructions without any jumps. The nodes in control flow graph are represented by basic blocks and the directed edges are represented by the jumps to other basic blocks. The directed edges can represent unconditional or conditional branching as well as loops. The static analyzer not only performs analysis within a function but also perform analysis across function calls. As a result, a call graph is also built. It is a graph (made up of nodes and directed edges) representing relationship between various functions in a program. The nodes in call graph are represented by the functions and directed edges are represented by function calls.

However, at places where the path depend on the run-time value or type (example virtual function calls, function pointer calls, delegate calls which are used heavily in modern object oriented applications) and cannot be determined precisely with static analysis algorithms, assumptions are made separately and are not allowed to be mixed with facts.

In fact an important difference between the said static analyzer [101] of the present invention compared to static analyzers in SAST is that assumptions are not allowed to be mixed with facts at any point by the said static analyzer [101] in any type of analysis and neither is the said static analyzer [101] allowed to report findings directly based on the assumptions. This does not mean that assumptions cannot be made. In fact assumptions and conflicts are important part of learning process. It means that assumptions and the effects of these assumptions are not part of the same space as facts. It also means that the assumptions have to be coordinated with advanced fusion analyzer [100] which can at a later point validate (prove they are correct), invalidate (prove they are wrong) or modify the assumptions based on a larger coordination across different components.

Further, the precise language specification and virtual/real machine specification is used along with precise resolution and accurate types whenever basic facts need to be established. For instance the possible paths are automatically constrained to compatible implementations only (such as compatible function or compatible override function of a type compatible with compile time type).

The said static analyzer [101] represents the accurate model of the application to advanced fusion analyzer [100] as facts.

In addition, the said static analyzer [101] performs dataflow analysis whenever required. A data flow analysis looks at possible set of values / data computed at various points of program. By traversing through the control flow graph and call graph it looks as how data is created, moved and consumed.

Further, the said static analyzer [101] performs taint analysis and model checking whenever requested by advanced fusion analyzer [100].

Further, the said static analyzer [101] performs type system analysis or use constraint solving, theorem proving or other approaches to establish additional facts whenever required. Facts can be represented as relations composed of symbolic or concrete values. For instance, deducing possible run-time values or types can be used to place additional constraints on possible paths. However there may be many cases where run-time values or types cannot be determined because of limitations of static analysis algorithms. Further, an application may use reflection or make heavy use of framework with dependency injection or other patterns making it difficult to determine run-time values or types.

If there are any assumptions during any analysis then the assumptions along with effects of these assumptions are reported separately.

In such cases static analyzer [101] relies on present invention for further analysis.

The said static analyzer [101] has bidirectional communication with advanced fusion analyzer [100]. The communication to advanced fusion analyzer [100] is used for passing facts and assumptions (in different space) or for initiating conflicts. The communication from advanced fusion analyzer [100] is used for performing further analysis whenever requested by advanced fusion analyzer [100] or when assumptions are impacted.

### 2) Dynamic Simulator [102]

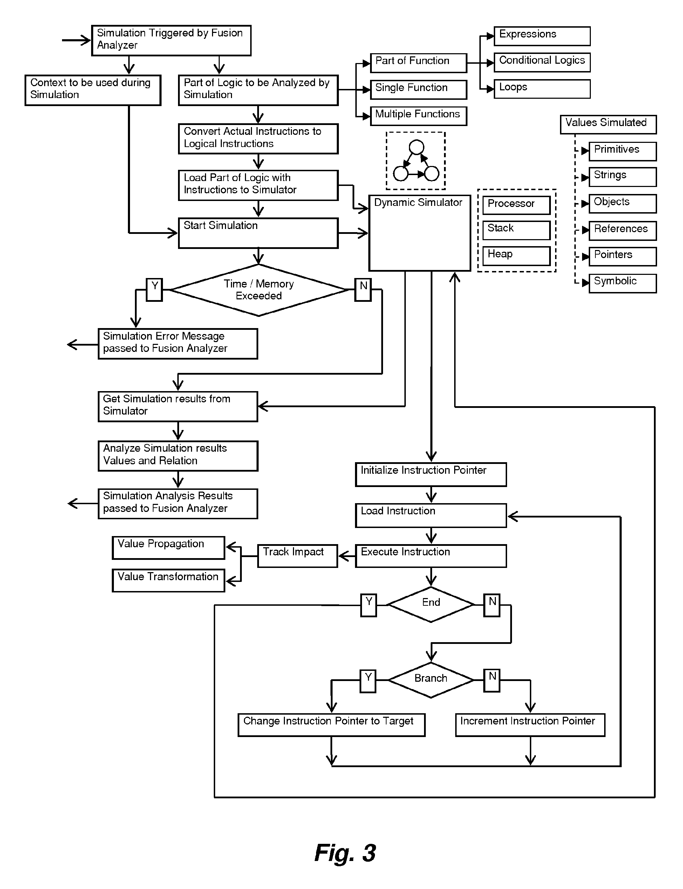

The dynamic simulator [102] of the present invention is used by advanced fusion analyzer [100] for modeling behavior or outcomes of different parts of logic when there are limitations of the static analyzer [101] in accurately modeling those areas. Fig. 3 shows the process flow of the said dynamic simulator [102]. The description of the said dynamic simulator [102] is as follows
The part of logic simulated by the said dynamic simulator [102] can be a portion of a function, a complete function or span across multiple functions. Further, the said functions can be static, instance or virtual. Moreover, the values simulated by the said dynamic simulator [102] can be primitives, strings, objects (instances of classes), references, pointers or symbolic values.

In addition, the said dynamic simulator [102] is used for simulating different parts of logic without requiring a running application in real environment which makes the said dynamic simulator [102] significantly useful as it can work uniformly at any level or depth of application.

Whereas, many internal areas of application can be missed and not executed with external tests on a real environment if for all entry points exact data cannot be crafted, the said dynamic simulator [102] does not have such limitation and can be used at any level or depth to gain better modeling of logic.

An important advantage of the said dynamic simulator [102] is the ability to start simulation at any relative point. Further, the said dynamic simulator [102] supports concrete values and even symbolic values where possible.

The said dynamic simulator [102] is invoked by advanced fusion analyzer [100] to run part of logic in a given context whenever required. Fusion analyzer [100] may change context other than the original context (use simpler concrete values) to make dynamic simulation practical. The simulation is done in a controlled environment to avoid logic exceeding predefined execution time and memory usage threshold.

Even though the said dynamic simulator [102] is effective for simulation of different parts of application logic, as it is neither a full virtual/real machine nor has complete environment, it cannot simulate or run entire application. This also implies that while the said dynamic simulator [102] will often produce close approximation of behavior of actual logic, it may not be as precise as an actual virtual/real machine in all cases.

The said dynamic simulator [102] has bidirectional communication with advanced fusion analyzer [100]. The communication from advanced fusion analyzer [100] is used for accepting parts of logic which need to be simulated. The communication to advanced fusion analyzer [100] is used for passing the simulation analysis results to the advanced fusion analyzer [100].

### 3) Dynamic Emulator [103]

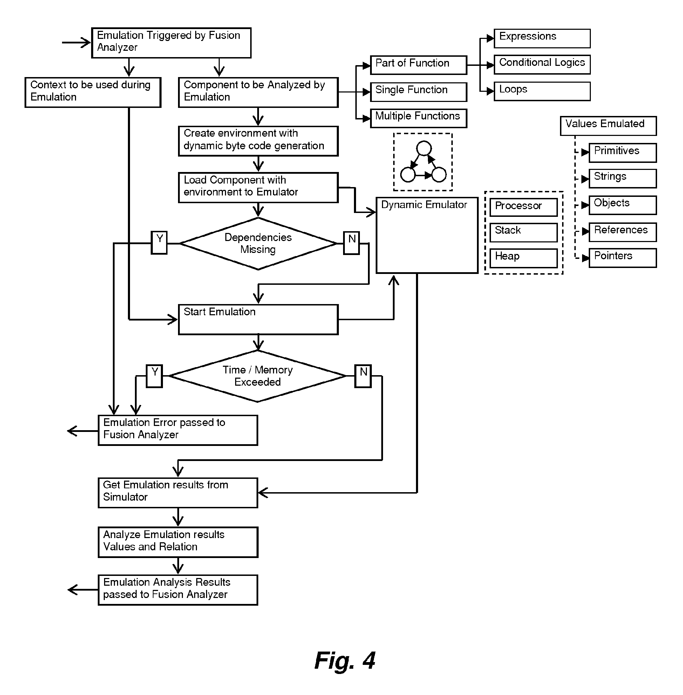

The dynamic emulator [103] of the present invention is used by advanced fusion analyzer [100] for modeling behavior of different components used by application when there are limitations of the static analyzer [101] in accurately modeling those components. Fig. 4 shows the process flow of the said dynamic emulator [103]. The description of the said dynamic emulator [103] is as follows

A virtual machine is used by the said dynamic emulator [103] for performing dynamic emulation of components in isolation. A component executed by the said dynamic emulator [103] can be a portion of a function (in which case it is wrapped around a function), a complete function or span across multiple functions. Further, the said functions can be static, instance or virtual. Moreover, the values emulated by the said dynamic emulator [103] can be primitives, strings, objects (instances of classes), references or pointers.

There are few important differences between dynamic emulator [103] and dynamic simulator [102]:
The dynamic emulator [103] runs the component to be tested with full precision. The behavior of the component in the dynamic emulator [103] is same as that in a real environment.

Because the dynamic emulator [103] uses a virtual machine, it has the ability to execute a component with nearly the same speed as that in an actual environment. This allows the dynamic emulator [103] to generate large number of tests on the component to check for behavior.

The dynamic emulator [103] only works with concrete values and only on a complete executable component unlike dynamic simulator [102] which is more flexible.

The said dynamic emulator [103] is invoked by advanced fusion analyzer [100] to run component in a given context whenever required. In order to run a component an environment around it is required which is created using dynamic byte code generation by the said dynamic emulator [103]. Also an analysis of component is carried out by the said dynamic emulator [103] before execution to ensure that it can work in isolation by verifying that there are no missing dependencies. The execution is done in a controlled environment to avoid component exceeding predefined execution time and memory usage threshold.

The above restrictions imply that not all components can be tested as many dependencies such as resources available in real application may not be available in the virtual machine used by the said dynamic emulator [103]. However, the primary purpose of the said dynamic emulator [103] is to test and model behavior of components which do not have such dependencies (such as many platform components). Further, because the said dynamic emulator [103] does not have a complete environment it cannot emulate or run entire application.

The virtual machine used by the said dynamic emulator [103] can be different (but is not mandatory) than the virtual machine under which the actual application is running. Keeping them separate has advantage of maintaining isolation.

The said dynamic emulator [103] has bidirectional communication with advanced fusion analyzer [100]. The communication from advanced fusion analyzer [100] is used for accepting components which need to be emulated. The communication to advanced fusion analyzer [100] is used for passing the emulation analysis results to the advanced fusion analyzer [100].

### 4) Configuration Analyzer [104]

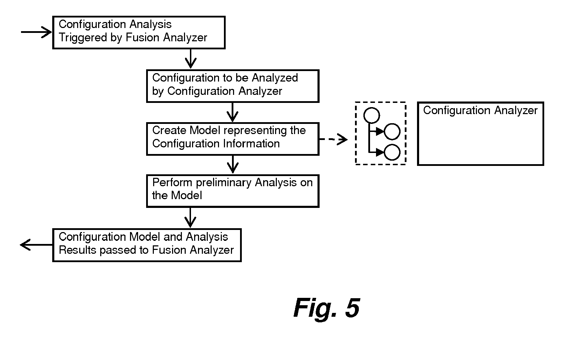

The configuration analyzer [104] of the present invention is used by advanced fusion analyzer [100] for analyzing configuration files used by application server running the application and frameworks used by the application. Fig. 5 shows the process flow of the said configuration analyzer [104]. The description of the said configuration analyzer [104] is as follows

The said configuration analyzer [104] reads configuration files and creates a model representing the configuration information. The structure of the said model depends on the type of configuration. For instance, an application server uses web.xml (for Java Platform) or web.config (for .Net Platform) for configuration of different aspects of web application. In this case the model created by configuration analyzer [104] represents detailed information contained in these configuration files. The said configuration analyzer [104] along with creating the model representing the configuration information also performs preliminary analysis on the model based on type of analysis requested during the trigger process by advanced fusion analyzer [100]. The analysis results are passed to advanced fusion analyzer [100]. Also, frameworks used by application for model-view-controller, dependency injection or other patterns map, connect and configure various application components at run-time using configuration. The said configuration analyzer [104] in such case creates a model representing the configuration information specific to the framework in use and passes it to advanced fusion analyzer [100]. The information about characteristics and behavior of a framework combined with the corresponding configuration model helps advanced fusion analyzer [100] in determining mapping, behavior and flow of those parts of application which are controlled by configuration. Further, advanced fusion analyzer [100] uses correlation and inference to relate configuration values with the run-time characteristics of the application as needed. For instance, if a URL pattern is mapped to a controller by a model-view-controller framework or a particular implementation of an interface is injected into another component in dependency injection framework then the said advanced fusion analyzer [100] will based on a sample of configuration value and run-time characteristic automatically attempt to deduce or infer other mappings based on correlation logic.

### 5) Instrumentor [105]

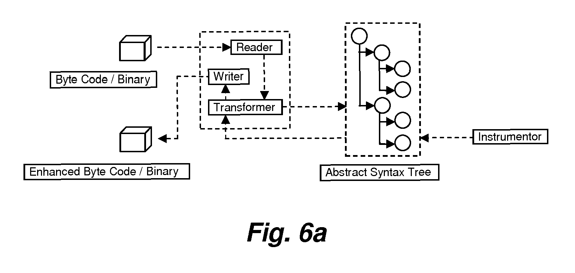

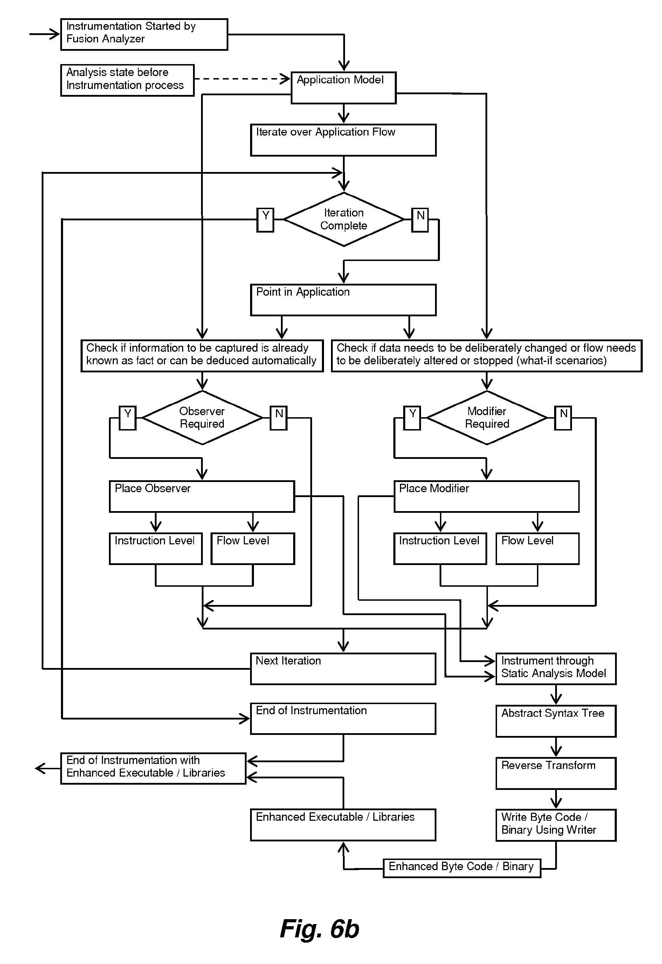

The instrumentor [105] of the present invention is used by advanced fusion analyzer [100] to instrument the application in order to capture the run-time information of the application when the application is executing in a real environment. The output of the said instrumentor [105] is an enhanced byte code/binary which when deployed to the application server results in above capability. Fig. 6a and 6b show the process flow of the said instrumentor [105]. The description of the said instrumentor [105] is as follows

The primary purpose of the said instrumentor [105] is to instrument the application by placing large number of observers [202] at appropriate points in application (determined during analysis without running application) such that whenever requested by advanced fusion analyzer [100] detailed information can be captured when the application is running. The placements of observers [202] do not change the functionality or behavior of the application. However, in cases when the actual flow of application needs to be deliberately altered or stopped or data needs to be deliberately changed, the said instrumentor [105] additionally instruments the application by placing modifiers [203] at appropriate points (determined during analysis without running application) if required such that whenever requested by advanced fusion analyzer [100] these actions can be performed by the modifiers [203].

The observers [202] are placed efficiently such that facts already known or deduced automatically by advanced fusion analyzer [100] (before instrumentation process) are not instrumented.

Further, the said instrumentor [105] in the present invention is precise and does not alter the functionality or behavior of application at all. In addition, the instrumentor [105] also instruments such that detailed information (both at instruction level as well as at flow level) is captured by the observers [202] whenever requested by advanced fusion analyzer [100] while the application is running. The only case when the flow or behavior of application is altered is when modifiers [203] are explicitly instructed by advanced fusion analyzer [100] to do so.

Further, the said instrumentor [105] is designed in a novel way to analyze and instrument only through the static analysis model and uniquely map instrumented points within static analysis model.

Further, the said instrumentor [105] works only as per the instructions of advanced fusion analyzer [100] which decides based on coordinated analysis (before instrumentation process) which points of application need to be instrumented. This allows advanced fusion analyzer [100] to analyze the application and efficiently instrument only the points which help in gaining new facts further.

### 6) Internal Run-Time Analyzer [106]

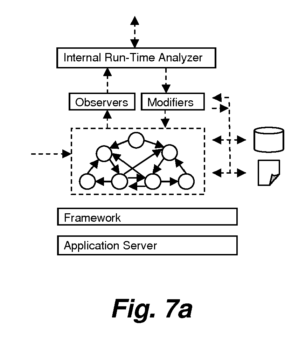

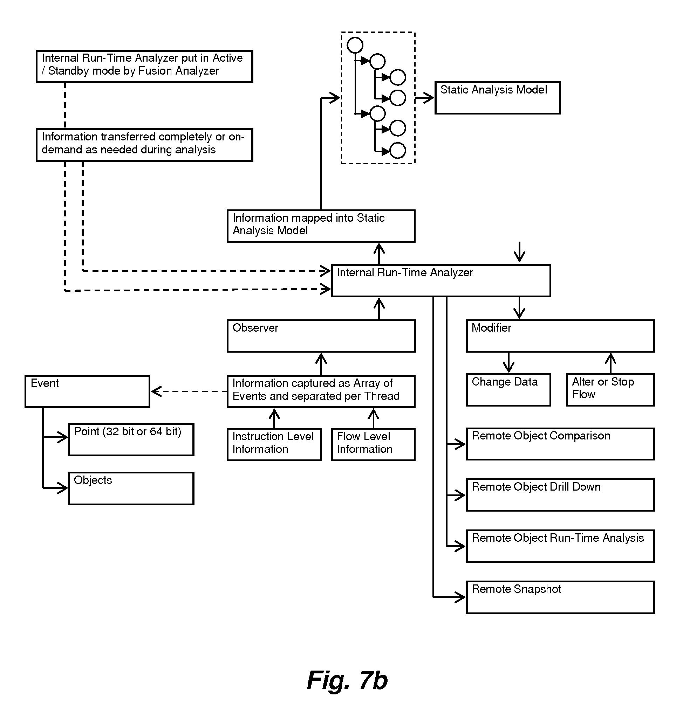

The internal run-time analyzer [106] of the present invention is used by advanced fusion analyzer [100] to capture detailed run-time information of the application from large number of observers [202] placed at appropriate points. Fig. 7a and 7b show the process flow of the said internal run-time analyzer [106]. The description of the said internal run-time analyzer [106] is as follows

The information captured by the said internal run-time analyzer [106] not only includes instruction level information including values but also flow level information of the application. Further, the said information is not captured as instructions with associated signatures but in a novel way as points which directly map into the static analysis model in advanced fusion analyzer [100]. This has significant advantage of not only being highly compact and fast during information transfer but also avoids costly resolution process. The information is captured as an array of events where an event is represented as a pair of point (of 32 bit or 64 bit) and objects (representing values) as applicable. Moreover, the events are further separated per thread for use cases which are multi-threaded.

By avoiding capturing of flow level information as instructions with associated signatures (which require more size and time for sending information when compared with sending 32 bit or 64 bit points already mapped into the static analysis model), compact and fast information transfer is achieved. Also, as the points directly map into the static analysis model, resolution process (which is costly i.e. time consuming) is avoided.

The values passed by the said internal run-time analyzer can optionally be transferred on-demand further compacting and improving performance by only transferring values required during analysis. Also, only primitive and string values are passed as is whereas other reference and pointer values are passed as markers (along with address or hash code computed from address) as they represent memory location in application process space.

Further, the said internal run-time analyzer [106] also performs comparison of different reference or pointer values whenever requested by advanced fusion analyzer [100] and can also drill down into an array or object whenever requested by advanced fusion analyzer [100]. This on-demand capability when coupled with advanced fusion analyzer [100] gives significant advantage by using comparison and drill down of objects to further enhance path and value analysis. It also uses the information captured to trigger and coordinate other components based on new facts.

Further, the said internal run-time analyzer [106] also performs run-time analysis of an object (such as determining run-time type of an object) whenever requested by advanced fusion analyzer [100]. This on-demand capability when coupled with advanced fusion analyzer [100] gives significant advantage by using run-time characteristics of objects to further gain new facts. It also uses the information captured to trigger and coordinate other components based on new facts.

The above types of analysis using comparison, drill down and run-time analysis on objects can also be collectively called remote object analysis.

The meaning of "remote object" is as follows. The internal-runtime analyzer captures information as events where an event is represented as a pair of point, either 32 bit or 64 bit, and objects representing values. As the application runs in a separate process (and can run even on a different machine) than the fusion analyzer, any objects within the application are not local for fusion analyzer and thus are remote objects. The internal-runtime analyzer also provides on-demand transfer of values by only transferring values required during analysis. Thus, during on-demand transfer, remote objects are transferred (converted to local objects) for analysis as required. The internal-runtime analyzer also provides on-demand comparison, drilldown and analyze of remote objects without transferring the remote objects. Thus, on-demand remote object comparison, drilldown and analysis are directly performed on remote objects (without any need to transfer the remote objects).

Further, the said internal run-time analyzer [106] can also be instructed by advanced fusion analyzer [100] to change data or alter or stop flow of application in which case the corresponding modifier [203] is called explicitly to do so. For instance, when a value needs to be changed (to check what-if scenarios) for a given test or when an invasive test needs to be selectively stopped. For example, it is often not desirable to allow invasive test values to flow into external resources (example database) or system calls (example run-time execution of system process). Such invasive calls can permanently move application into an undesirable state. A modifier [203] preventing the flow further will stop such invasive tests. Modifiers [203] can also be instructed by advanced fusion analyzer [100] to selectively allow (based on context of test) flow into external resource. For instance, fetching data from database can be allowed while any changes to data can be disallowed. Modifiers [203] can also be instructed by advanced fusion analyzer [100] to force application flow to be changed (to check what-if scenarios) to take a given path.

Moreover, the said internal run-time analyzer [106] is put into standby mode when not in use and activated by advanced fusion analyzer [100] only when needed, such as during explicit external test (around request / response boundary).

Further, the said internal run-time analyzer [106] can also take a complete snapshot of all run-time information captured for a particular test by making copy of the events captured whenever requested by advanced fusion analyzer [100]. By cross comparing events of different snapshots for different test cases, changes in flow and other information can be detected which gives significant advantage. The point at which change in flow occurs would be a point of interest at which two test cases have been logically processed differently. This information is further used by advanced fusion analyzer [100] for analysis. This type of analysis can also be called remote snapshot analysis or differential snapshot analysis.

### 7) External Run-Time Analyzer [107]

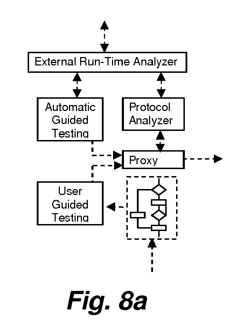

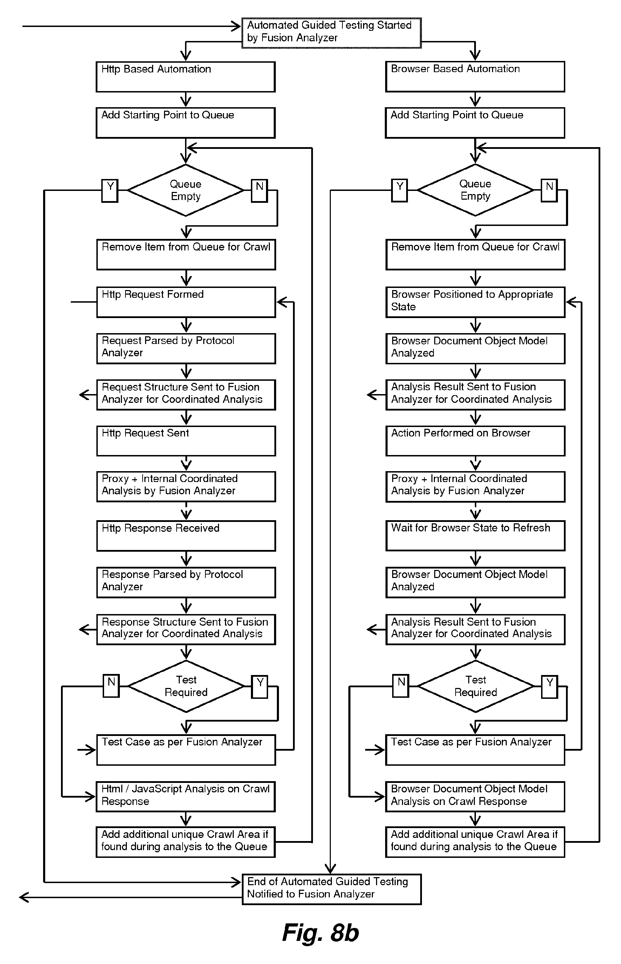

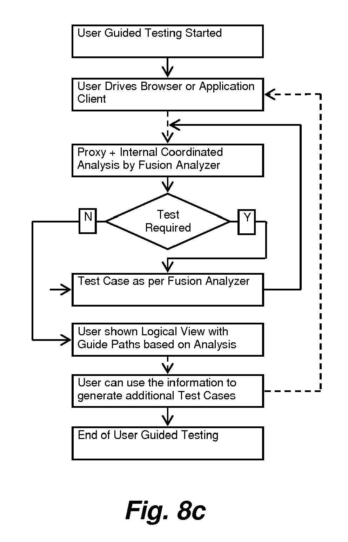

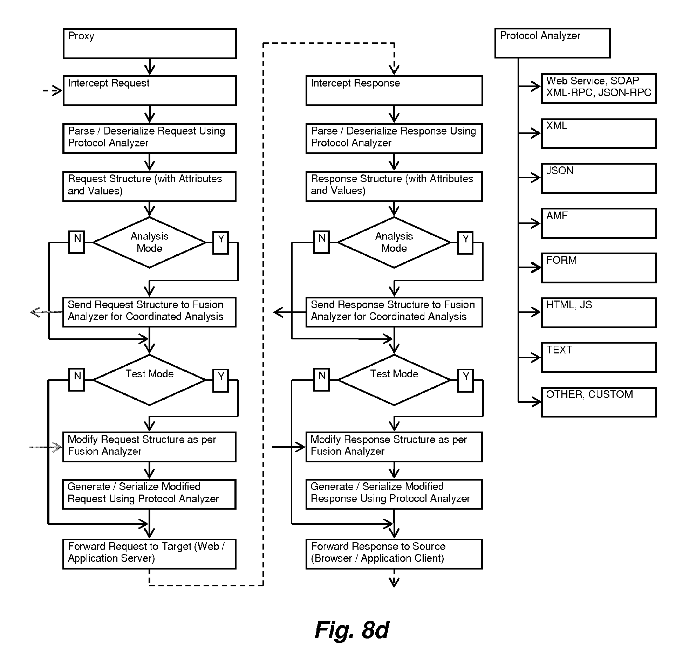

The external run-time analyzer [107] of the present invention is used by advanced fusion analyzer [100] to perform external tests on an application and perform external analysis. Fig. 8a to 8d show the process flow of the said external run-time analyzer [107]. The description of the said external run-time analyzer [107] is as follows

The external test performed by the said external run-time analyzer [107] can be accompanied by internal observation using internal run-time analyzer [106] whenever requested by advanced fusion analyzer [100]. This is followed by a coordinated analysis by advanced fusion analyzer [100] in order to gain better modeling of the application behavior.

There are two types of testing mechanisms.

In automatic guided testing [204], advanced fusion analyzer [100] provides a starting point (such as URL) of application which is used by automatic guided testing [204] for creating initial request. The automatic guided testing [204] can directly send this request to server as HTTP request and process HTTP response by performing HTML/JavaScript parsing or analysis via protocol analyzer [207]. Alternatively, the automated guiding testing indirectly can use browser based automation to send the request via browser and analyze response via browser document object model. Using browser based automation has advantage of being more effective on Web 2.0 AJAX applications.

The results of request and response parsed by protocol analyzer [207] or browser document object model are sent to advanced fusion analyzer [100] which along with observation using internal run-time analyzer [106] followed by a coordinated analysis results in better modeling of the application behavior.
Once analysis is complete the said automatic guided testing [204] is instructed by advanced fusion analyzer [100] to go over next functionality or use case and the process is repeated.

Another advantage of internal analysis is that advanced fusion analyzer [100] can both monitor how much code has been covered as well as guide to certain extent further tests based on internal analysis. A refinement of testing such as automatic modification of payload based on analysis can be performed as needed. Unlike black box approach, blind fuzzing or blind guessing is not performed, rather limited numbers of but more effective test cases are generated as needed based on full internal analysis.

As the above process may have limitations in traversing all entry points or generating proper data so user guided testing [205] is also possible.

In user guided testing [205] advanced fusion analyzer [100] waits for user to go over the functionality of application and provide right input data as if using application normally. The advanced fusion analyzer [100] automatically uses internal run-time analyzer [106] and coordinated analysis to gain better modeling of the application behavior. An advantage is that the user can use any type of client whose communication protocol can be parsed by protocol analyzer [207]. For example client applications targeting browser with Web 1.0 or Web 2.0 technology such as AJAX, RIA (Flex, Silverlight), generic web service client, desktop applications, and mobile applications can be used to generate and send requests to application. The protocol analyzer [207] automatically parses request and response protocols and communicates the information to advanced fusion analyzer [100] for analysis. Moreover, in case a refinement of testing like automatic modification of payload is needed the protocol analyzer [207] can be instructed to do so.

The communication from automatic guided testing [204] or user guided testing [205] to application is monitored by a proxy [206], which in turn works with appropriate protocol analyzer [207] (such as XML, JSON, AMF, FORM, HTML, JS, TEXT or custom) for understanding the request and response protocol used by the application. The information is then sent to advanced fusion analyzer [100] which uses the structure for performing both attribute based analysis as well as value based analysis for finding issues against each input. The protocol analyzer [207] is also used for automatic modification of payload in case a retest is needed which in turn works with proxy [206] for automatically altering the information during transit. The said proxy [206] also notifies request/response boundaries to advanced fusion analyzer [100] which is used for activation of internal run-time analyzer [106] as needed.

### 8) Logical View with Guide Paths [108]

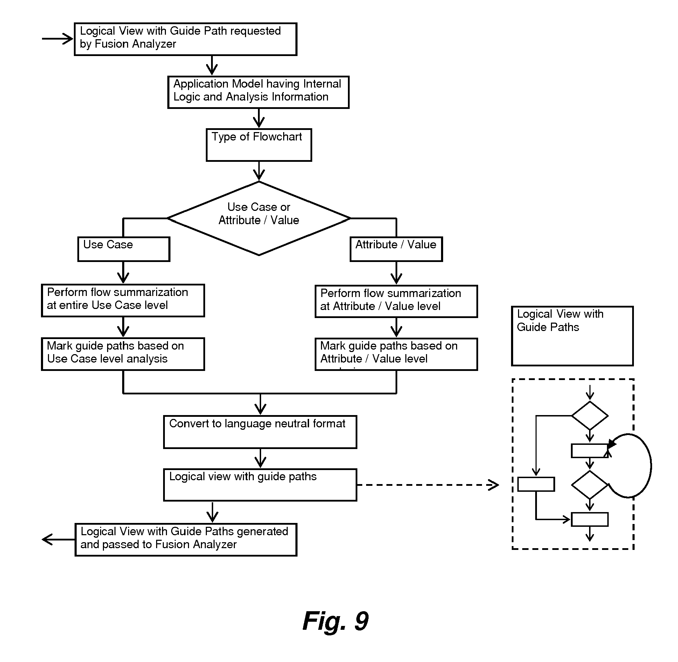

The logical view with guide paths [108] of the present invention is used by advanced fusion analyzer [100] to automatically present higher level summary flowcharts representing internal logic of application along with analysis. Fig. 9 shows the process flow of the said logical view with guide paths [108]. The description of the said logical view with guide paths [108] is as follows

The flowchart presented by the said logical view with guide paths [108] can be at entire use case level or at individual attribute or value level (showing relation to other values if applicable). In addition, the flowchart also shows paths for guidance which can be used by automated testing [204] or user testing [205] for driving new tests.

As shown in Fig. 9, the information (logical view with guide paths) from this component is also passed to fusion analyzer thus providing a feedback mechanism for driving new tests and providing functionality beyond presentation of information. Further, as shown in Fig. 9, this component performs flow summarization, marks guide paths and converts to language neutral format before presenting the information (logical view with guide paths) to the user and also passing the information to fusion analyzer.

Further, the flowchart is in language neutral format to make it easier to understand and can be automatically included as part of findings during reporting.

An advantage of the flowcharts presented to user along with paths for guidance is giving users ability to understand higher level logic quickly both at use case level as well as at individual input level and thus helps in guiding users. It gives a logical perspective for creating further test cases which can further improve testing and enhance code coverage. It also opens up the possibility of using logical view with guide paths [108] for quickly understanding overview of application implementation without having to spend too much time trying to comprehend source code.

**The working of the present invention is broadly categorized in the following steps:**

### 1) Analysis without running application

The advanced fusion analyzer [100] starts by taking the application and separates it by different platforms and languages.

The meaning of "separating the application by different platforms and languages" is as follows. An application may not necessarily be developed in one platform (Java, .Net etc.) or one language (Java, JSP, C#, ASP.Net, VB.Net, JavaScript etc.). Since different platforms and languages require different implementation of components that are platform or language specific (for example different implementation of parser is required based on language), an application is separated by the platforms and languages it is developed in and its parts are processed by the corresponding implementation of component (for example Java parser for Java source codes, C# parser for C# source codes, JavaScript parser for Javascript source codes etc.).

A static analyzer [101] is then used to perform analysis on the application source codes as well as byte codes / binaries.

The said static analyzer [101] builds a representation of application as a very accurate model which is resolved and represents all the components such as types, fields, methods making up the application including all dependent framework, platform and libraries

The said static analyzer [101] then performs control flow analysis by building a control flow graph and call graph. Further, the said static analyzer [101] represents the accurate model of the application to advanced fusion analyzer [100] as facts. In addition, the said static analyzer [101] performs dataflow analysis whenever required. Further, the said static analyzer [101] performs taint analysis and model checking whenever requested by advanced fusion analyzer [100]. Further, the said static analyzer [101] performs type system analysis or use constraint solving, theorem proving or other approaches to establish additional facts whenever required.

The said static analyzer [101] is requested by advanced fusion analyzer [100] to perform initial analysis and it in turn runs above analysis algorithms to establish additional facts.

Whenever the said static analyzer [101] makes any assumptions those assumptions and effects of those assumptions are kept in different space than facts. The assumptions are coordinated with advanced fusion analyzer [100] which can at a later point validate (prove they are correct), invalidate (prove they are wrong) or modify the assumptions based on a larger coordination across different components.

For cases where the said static analyzer [101] is unable to proceed effectively or hits limitation at a particular point, the advanced fusion analyzer [100] uses other components to guide static analyzer [101] just as the said static analyzer [101] is used to by advanced fusion analyzer [100] to guide other components.

The above process may not necessarily happen immediately. If run-time analysis at later point in time comes with additional facts which help the said static analyzer [101] then additional static analysis is triggered based on new facts.

The advanced fusion analyzer [100] then uses configuration analyzer [104] to analyze configuration files and use that information to drive static analyzer [101] further.

The advanced fusion analyzer [100] then uses dynamic simulator [102] and dynamic emulator [103] to perform analysis on logic and components where static analysis is not effective and has limitations.

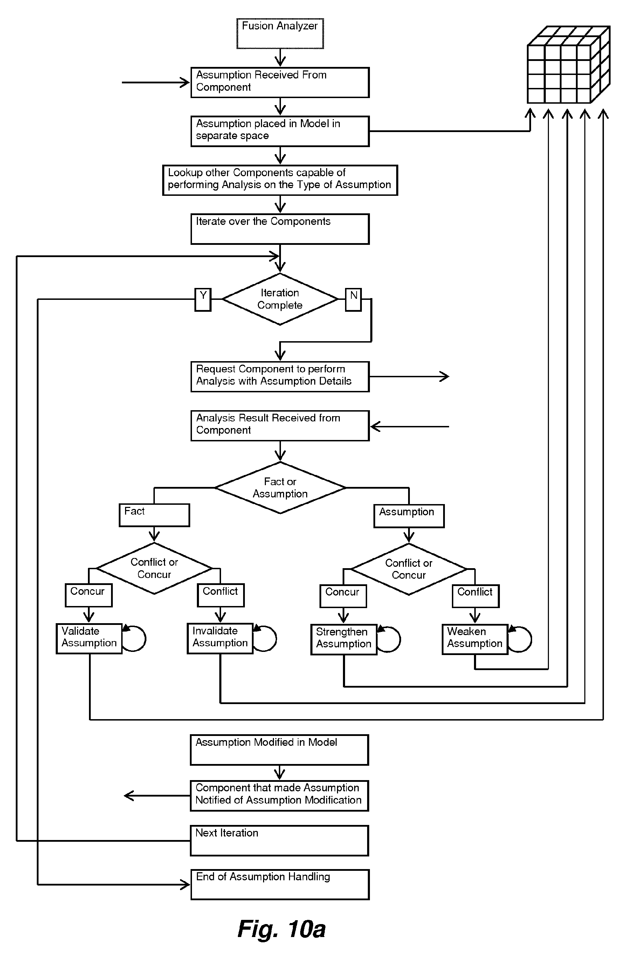

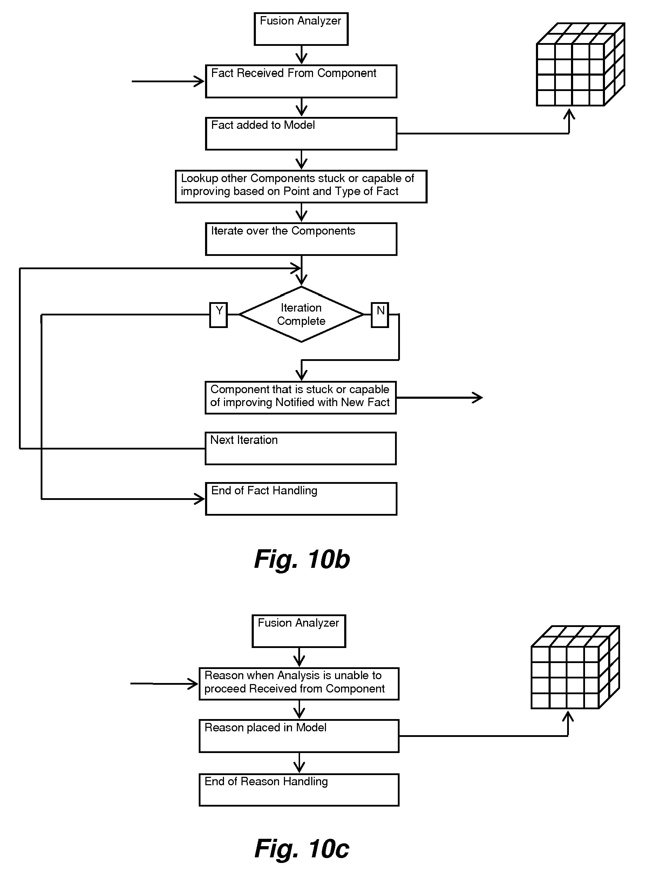

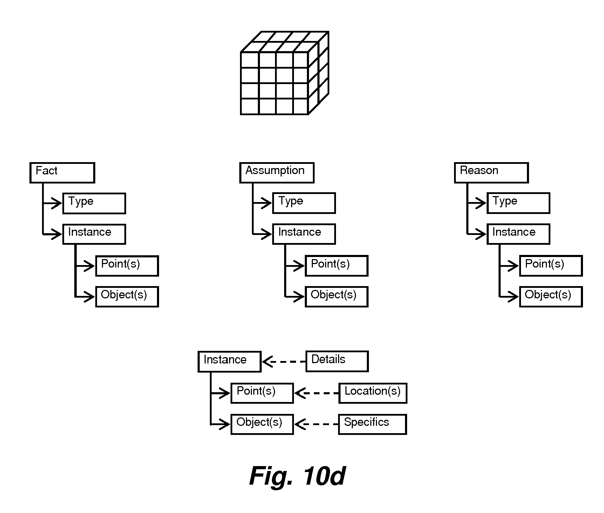

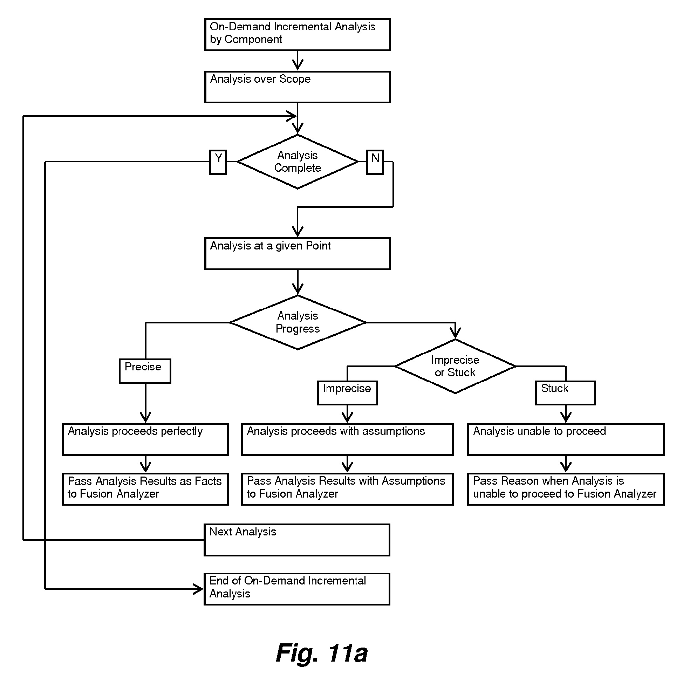

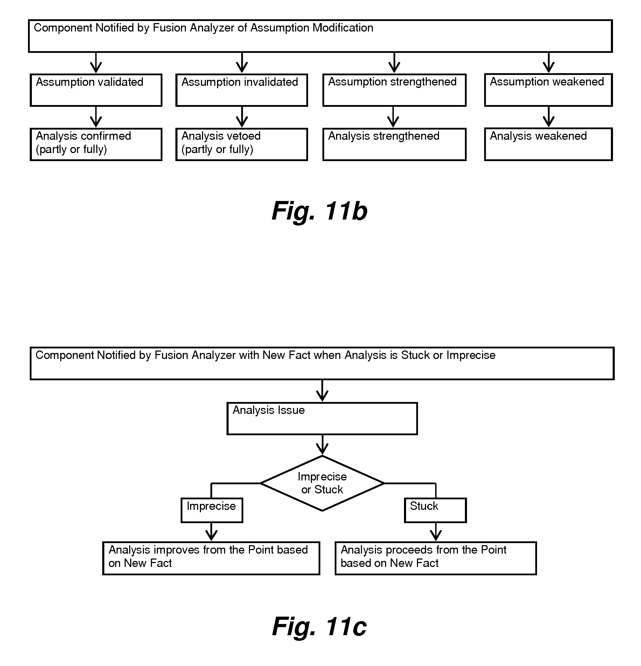

A multi-way coordination and orchestration process across static analyzer [101], dynamic simulator [102] and dynamic emulator [103] is then initiated by advanced fusion analyzer [100] to build and refine the model [200] representing knowledge and behavior of the application. The process is very iterative. Once the system stabilizes all the facts and assumptions can be gained from coordination across above components are known. Fig. 10a to 10d show the general fusion analyzer coordination process flow. Fig. 11a to 11c show the general component participation process flow. Both, the coordination by fusion analyzer and participation by the components are critical for the multi-way coordination and orchestration process.

In multi-dimensional model, facts are strictly stored in separate space (layer or dimension or cluster). Related assumptions and impact of those assumptions are stored in separate space (layer or dimension or cluster). Further, both facts and assumptions can be based on a particular context in which case they are further separated by the context.

The static analyzer [101], dynamic simulator [102] and dynamic emulator [103] components are used again along with additional components to perform even larger coordination during run-time analysis.

### 2) Instrumentation

Once the above analysis is completed, advanced fusion analyzer [100] uses instrumentor [105] to instrument the application. The instrumentation, based on above analysis, is done only at points which help in gaining new facts or learning further. This process helps in gaining new facts required for further understanding of application behavior with just the right amount of instrumentation.

The end result of instrumentation process is an enhanced byte code/binary which when deployed to the application server gives ability to capture the run-time information of the application when the application is executing in a real environment.

### 3) Analysis with running application

Once the application has been instrumented, advanced fusion analyzer [100] starts a multi-way coordination and orchestration process across external run-time analyzer [107], internal run-time analyzer [106], static analyzer [101], dynamic simulator [102] and dynamic emulator [103]. Fig. 10a to 10d show the general fusion analyzer coordination process flow. Fig. 11a to 11c show the general component participation process flow. Both, the coordination by fusion analyzer and participation by the components are critical for the multi-way coordination and orchestration process.

The external run-time analyzer [107] is used by advanced fusion analyzer [100] to perform external tests on an application and perform external analysis.

The internal run-time analyzer [106] is used by advanced fusion analyzer [100] to capture detailed run-time information of the application from large number of observers [202] placed at appropriate points during instrumentation process.

The internal run-time analyzer [106] is also used by advanced fusion analyzer [100] to alter or stop flow of application or change data with modifiers placed at appropriate points during instrumentation process if required.

As external tests happen (either automatic guided testing [204] or user guided testing [205]), with every test, both external run-time information and internal run-time information is captured in detail from the two components and advanced fusion analyzer [100] uses facts and assumptions obtained to trigger a multi-way coordination and orchestration process. With every new fact and assumption coming in the model [200] representing knowledge and behavior of the application becomes more and more refined. Conflicts are triggered by components or advanced fusion analyzer [100] whenever there is a contradiction between assumption and fact or between assumptions. A conflict results in weakening or invalidation of assumption, thus triggering weakening or invalidation of all other assumptions which depended on the assumption and the process continues iteratively. Similarly, concur are triggered by components or advanced fusion analyzer [100] whenever assumptions are proved to be correct based on facts or are supported by other assumptions. A concur results in strengthening or validation of assumption, thus triggering strengthening or validation of all other assumptions which depended on the assumption and the process continues iteratively.

The advanced fusion analyzer [100] also performs following advanced analysis in multi-way coordination and orchestration across components Guided Path Analysis - In guided path analysis, whenever a use case is executed, the information (points) captured by internal run-time analyzer [106] is used to create the actual execution path and mapped on top of static analysis model which is then used by advanced fusion analyzer [100] to perform focused analysis on the path that got executed as well as field of execution around the actual execution path using multi-way coordination and orchestration across components. This type of analysis can also be called execution field analysis.

Guided Value Analysis - In guided value analysis, whenever a use case is executed, the information (values) captured by external run-time analyzer [107] is used to match with the information (values) captured by internal run-time analyzer [106] along the execution path mapped on top of static analysis model which is then used by advanced fusion analyzer [100] to perform focused analysis based on values. Because matching values do not necessarily indicate a relationship, multi-way coordination and orchestration across components is used to validate or invalidate assumptions made by external run-time analyzer [107]. Further, the values captured from internal run-time analyzer [106] can themselves be matched with other values from internal run-time analyzer [106] along the execution path to continue with the analysis based on values. This type of analysis can also be called value hopping analysis.

Startup Analysis - A startup analysis is triggered whenever application components managed by a framework are connected, configured or coupled. The new run-time information when captured by internal run-time analyzer [106] is communicated to advanced fusion analyzer [100] which automatically triggers multi-way coordination and orchestration process. For instance, if static analyzer [101] is unable to determine run-time class of an interface managed / injected by a framework because of limitation and either does not proceed or proceeds but with assumptions, then the run-time information captured and communicated to advanced fusion analyzer [100] later automatically makes static analyzer [101] proceed from the point where was stuck or strengthens / weakens the assumption based on which static analyzer [101] proceeded initially. This type of analysis can also be called connect/configure/couple time analysis.

Lateral Analysis - A lateral analysis is triggered whenever a use case is executed and the information captured by internal run-time analyzer [106] is not only used to enhance the analysis for that particular use case but also laterally across other use cases. Thus, run-time analysis of an executed use case may be used to improve the results of non-executed use cases also. This may be possible because applications are often designed with multiple layers (presentation, business logic, data access) and many application components are shared. An improvement in modeling logic and behavior of one area of application when coordinated and orchestrated across other areas sharing common application components can automatically be used by advanced fusion analyzer [100] to improve results across other areas. This type of analysis can also be called lateral relation analysis.

The analysis performed by the present invention using advanced fusion analyzer [100] is very iterative and detailed. Any changes to the multi-dimensional model [200] whether by reasoning and learning logic or by information and events received from the components are used to drive the components further by sending information and events to them and again the information and events received as a result are used to further trigger the entire process until the system stabilizes. This chain reaction continuously improves the model [200] representing knowledge and behavior of the application and results in accurate modeling with detailed analysis.

The analysis performed by the present invention using advanced fusion analyzer [100] for multi-way coordination and orchestration is not limited to a single process. Number of microscopic sub-processes can run simultaneously, each focusing on different area or aspect of the multi-dimensional model [200] and coordinating and orchestrating independently. Thus, a component of the present invention can be called simultaneously by different sub-processes.

The term sub-processes refers to (logical) processes spun off from primary process for the purpose of focusing on different area or aspect of the multi-dimensional model [200] and coordinating and orchestrating independently. Thus, sub-processes (which can be considered as threads) enable parallel analysis (instead of sequential analysis).

Thus, the present invention coordinates and orchestrates multiple components running different technologies such that the accuracy obtained is far greater than a simple sum of benefits that the technologies can offer in isolation or even with current combination techniques. The multi-way coordination and orchestration also allows Fusion, as a complete system, to overcome many of the weaknesses inherent with each of these technologies.

### 4) Rules and Reporting Findings

As the fundamental focus of advanced fusion analyzer [100] is to gain a detailed understanding of application behavior rather than directly jump on finding security or quality issues, the components of the present invention are designed purely for analyzing and modeling application logic and behavior with no security or quality specific logic or implementation. Finding security and quality issues becomes significantly accurate with detailed analysis and modeling of application logic and behavior.

Although the advanced fusion analyzer [100], components and processes are designed with no security or quality specific logic or implementation, in order to determine security and/or quality issues, the advanced fusion analyzer [100] further drives the components based on what the rules [300] contain. The rules are written in expressive rule language that spans across different analyzers used in the present invention.

Thus, the rules [300] alone define which specific aspects of security, quality or a combination of both need to be checked for. All other components are completely generic.

Thus, application security analysis is done by using by using security specific rules and application quality analysis is done by using quality specific rules.

The result of analysis based on rules is put in a report [400] which contains findings and summary based on the analysis.

### ADVANTAGES OF INVENTION:

The present invention gives higher accuracy, efficiency and flexibility in analyzing applications for finding security and quality issues because of the following
1. **Design and Process** - The present invention is a novel application analysis system providing a platform for accurately analyzing applications which is useful in finding security and quality issues in an application. The design and process is advanced, unique and innovative.
2. **Multi-Way Coordination and Orchestration** - The present invention is composed of an advanced fusion analyzer [100] which performs a novel multi-way coordination and orchestration across components used in the present invention to build and continuously refine a model [200] representing knowledge and behavior of the application. The components are coordinated continuously whenever the model [200] changes because of reasoning and learning logic or by information and events received from components themselves. The components do not communicate directly with each other or control the process. Fusion analyzer [100] which is logically separate has the control and performs the multi-way coordination and orchestration.
3. **Multi-Dimensional Model with Facts and Assumptions** - In the present invention, advanced fusion analyzer [100] uses a multi-dimensional model [200] representing knowledge and behavior of the application as facts and assumptions. Facts are strictly stored in separate space (layer or dimension or cluster). Related assumptions and impact of those assumptions are stored in separate space (layer or dimension or cluster). Further, both facts and assumptions can be based on a particular context in which case they are further separated by the context.
**4. Model Refinement with Validation, Invalidation, Concur and Conflict Event Orchestration -** In the present invention, facts and assumptions come from components or from advanced fusion analyzer [100] itself. Fusion analyzer [100] performs orchestration across components whenever assumptions are made or new facts impacting existing assumptions, capable of improving analysis of components or capable of making components proceed from stuck state come in. The assumptions can be proved, disproved, strengthened or weakened by a coordination process across other components or by advanced fusion analyzer [100] itself. This can happen immediately or at a later point in time when more facts and assumptions come in.
5. **Components with unified participating model** - Although components used by advanced fusion analyzer [100] work on different technology and have different capabilities, they are all designed with a unified participating model. The underlying information received and sent to the components are in different format depending on the specific technology. However, all components are designed to have unified participating model for exchanging facts and assumptions and participate in event orchestration with ability to validate, invalidate, concur or conflict assumptions.
6. **Iterative and detailed Analysis -** The analysis performed by the present invention using advanced fusion analyzer [100] is very iterative and detailed. Any changes to the multi-dimensional model [200] whether by reasoning and learning logic or by information and events received from the components are used to drive the components further by sending information and events to them and again the information and events received as a result are used to further trigger the entire process until the system stabilizes. This chain reaction continuously improves the model [200] representing knowledge and behavior of the application and results in accurate modeling with detailed analysis.
7. **Analysis with multiple Sub-Processes** - The analysis performed by the present invention using advanced fusion analyzer [100] for multi-way coordination and orchestration is not limited to a single process. Number of microscopic sub-processes can run simultaneously, each focusing on different area or aspect of the multi-dimensional model [200] and coordinating and orchestrating independently. Thus, a component of the present invention can be called simultaneously by different sub-processes.
8. **Non Run-time Analysis -** In the present invention, advanced fusion analyzer [100] is capable of performing analysis on application both with and without application running in a real environment. Although additional run-time analysis will result in optimal analysis, even without performing run-time analysis (using limited multi-way coordination and orchestration) the present invention is capable of generating useful non-run-time analysis results.
9. **Instrumentor -** The instrumentor [105] in the present invention is designed in a novel way to analyze and instrument only through the static analysis model and uniquely map instrumented points within static analysis model. In addition, the instrumentor [105] also instruments such that detailed information (both at instruction level as well as at flow level) is captured by the observers [202]. The observers [202] are also placed efficiently such that facts already known or deduced automatically by advanced fusion analyzer [100] (before instrumentation process) are not instrumented.
10. **Event Capture and Transfer -** The internal run-time analyzer [106] does not capture information as instructions with associated signatures but in a novel way as points which directly map into the static analysis model in advanced fusion analyzer [100]. This has significant advantage of not only being highly compact and fast during information transfer but also avoids costly resolution process. The information captured not only includes instruction level information including values but also flow level information of the application. Also the values can be transferred on-demand further compacting and improving performance by only transferring values required during analysis. The information is captured as an array of events where an event is represented as a pair of point (of 32 bit or 64 bit) and objects (representing values) as applicable.
11. **Guided Path and Value Analysis -** The advanced fusion analyzer [100] also performs following advanced analysis in multi-way coordination and orchestration across components
   1) Guided Path Analysis
   2) Guided Value Analysis
12. **Startup and Lateral Analysis -** The advanced fusion analyzer [100] also performs following advanced analysis in multi-way coordination and orchestration across components
   1) Startup Analysis
   2) Lateral Analysis
13. **Remote Object Analysis -** The advanced fusion analyzer [100] in coordination with internal run-time analyzer [106] performs on-demand remote analysis on object(s). The on-demand capability when coupled with advanced fusion analyzer [100] gives significant advantage by using following analysis on object(s) to further enhance path and value analysis, gain new facts and trigger and coordinate other components based on new facts
   1) Remote object comparison
   2) Remote object drill down
   3) Remote object run-time analysis
14. **Remote Snapshot Analysis -** The advanced fusion analyzer [100] in coordination with internal run-time analyzer [106] also has capability to take a complete snapshot of all run-time information captured for a particular test by making copy of the events captured. By cross comparing events of different snapshots for different test cases, changes in flow and other information can be detected which gives significant advantage. The point at which change in flow occurs would be a point of interest at which two test cases have been logically processed differently. This information is further used by advanced fusion analyzer [100] for analysis.
15. **Logical View with Guide Paths -** The logical view with guide paths [108] of the present invention is used by advanced fusion analyzer [100] to automatically present higher level summary flowcharts representing internal logic of application along with analysis. The flowchart can be at entire use case level or at individual attribute or value level (showing relation to other values if applicable). In addition, the flowchart also shows paths for guidance which can be used by automated testing [204] or user testing [205] for driving new tests. The flowchart is in language neutral format to make it easier to understand and can be automatically included as part of findings during reporting.
16. **Alternatives Embodiments -** The present invention uses advanced fusion analyzer [100] to perform a novel multi-way coordination and orchestration across components used in the present invention. As the multi-way coordination and orchestration design used by advanced fusion analyzer [100] design itself is flexible, not all components are required for advanced fusion analyzer [100] to perform analysis. Those components when included will however result in optimal analysis. The optional components are
   a) In Static Analyzer [101] either the source code processor or byte code/binary processor (but not both) can be optional. The static analyzer [101] can work with an application submitted in all four modes.
      1) Application available in pure source form.
      2) Application available in pure byte code/binary form.
      3) Application available as a mix of source and byte code/binary form with source to be given priority over byte code/binary whenever available.
      4) Application available as a mix of source and byte code/binary form with byte code/binary to be given priority over source whenever available.

      However, when only one type of processor, source code or byte code/binary is available then the application can only be submitted in corresponding form. While all four combinations are possible in theory, in practice the lack of byte code/binary processor impacts analysis of platform / framework libraries that are only available in byte code/binary form. Also, instrumentation process happens at byte code/binary level.
   b) Dynamic Emulator [103] can be optional.
   c) Even without run-time analysis possible with instrumentor [105], internal run-time analyzer [106] and external run-time analyzer [107], advanced fusion analyzer [100] using limited multi-way coordination and orchestration is capable of generating useful non-run-time analysis results.
   d) In Internal Run-Time Analyzer [106] modifiers [203] can be optional.
   e) In External Run-Time Analyzer [107] either the automatic guided testing [204] or user guided testing [205] (but not both) can be optional.

### INDUSTRIAL APPLICABILITY OF INVENTION

The present invention is useful for analysis of internet/intranet based web applications, desktop applications, mobile applications and also embedded systems as well as for hardware, equipment and machines controlled by software.

### References

http://en.wikipedia.org/wiki/Control_flow_analysis
http://en.wikipedia.org/wiki/Data-flow_analysis
http://en.wikipedia.org/wiki/Type system
http://en.wiki-pedia.org/wiki/Constraint_solving
http://en.wikipedia.org/wiki/Automated_theorem_proving
http://en.wikipedia.org/wiki/Abstract_interpretation
http://en.wikipedia.org/wiki/Model_checking
http://en.wikipedia.org/wiki/Concolic_testing

## Claims

1. A system for providing a platform for analyzing applications with multi-way coordination and orchestration, the system comprising
- advanced fusion analyzer comprising means for
- using multi-way coordination and orchestration across components for analyzing application;
- building and continuously refining a multi-dimensional model representing knowledge and behavior of the application as a network of objects across different dimensions;
- using reasoning and learning logic on this model along with information and events received from the components to both refine the multi-dimensional model further as well as drive the components further by sending information and events to them;
- again using the information and events received from the components as a result of driving the components to further trigger the entire process until the system stabilizes;
- static analyzer component comprising means for
- participating in multi-way coordination and orchestration process with advanced fusion analyzer;
- performing analysis on source codes as well as byte codes or binaries;
- processing of source code comprising
- performing lexical analysis and syntactic analysis of source codes resulting in parse tree and then transforming the parse tree to abstract syntax trees;
- performing semantic analysis comprising
- ensuring that the program composed of abstract syntax trees from multiple source codes containing types, variables and functions is properly defined and together they express a proper program;
- tracking type, variable and function declarations and usage by performing symbol resolution and proper type checking;
- ensuring that for strongly typed languages, every variable and expression has a type and its usage is correct and compatible as per the type system;
- loading and checking all interdependent source codes making up the program;
- checking and verifying the usage of libraries by application;
- processing of byte codes or binaries comprising
- reading byte codes for application which is compiled to an intermediate language and transforming to abstract syntax trees;
- reading binaries for application which is compiled to final machine code resulting and transforming to abstract syntax trees;
- performing semantic analysis comprising
- ensuring that the program composed of abstract syntax trees from multiple byte codes containing types, variables and functions is properly defined and together they express a proper program;
- tracking type, variable and function declarations and usage by performing symbol resolution and proper type checking;
- loading and linking all interdependent byte codes making up the program;
- checking and verifying the usage of libraries by application;
- resolving application available in pure source form, pure byte code or binary form or a mix of both source and byte code or binary form using a mixed resolver;
- resolving all dependent libraries;
- performing the lexical analysis, syntactic analysis, reading of byte codes or binaries, semantic analysis following language specification and virtual or real machine specification;
- representing application as a model which is resolved and represents all the components of the application such as types, fields, methods making up the application including all dependent libraries;
- performing control flow analysis by building a control flow graph and call graph;
- establishing facts as required by using language specification and virtual or real machine specification along with resolution and types;
- representing the model of the application to advanced fusion analyzer as facts;
- performing dataflow analysis as required;
- performing taint analysis and model checking whenever requested by advanced fusion analyzer;
- performing type system analysis or using constraint solving, theorem proving or other approaches to establish additional facts as required;
- passing analysis results to advanced fusion analyzer;
- performing analysis whenever requested by advanced fusion analyzer;
- dynamic simulator component comprising means for
- participating in multi-way coordination and orchestration process with advanced fusion analyzer;
- modeling behavior or outcomes of different parts of logic;
- simulating part of logic which can be a portion of a function, a complete function or span across multiple functions;
- simulating functions which can be static, instance or virtual;
- simulating values which can be primitives, strings, objects, references, pointers or symbolic values;
- simulating part of logic in a given context whenever requested by advanced fusion analyzer;
- controlling the environment to avoid logic exceeding predefined execution time and memory usage threshold;
- accepting parts of logic which need to be simulated from advanced fusion analyzer;
- passing the simulation analysis results to the advanced fusion analyzer;
- dynamic emulator component comprising means for
- participating in multi-way coordination and orchestration process with advanced fusion analyzer;
- modeling behavior of different components of the application;
- using a virtual machine for performing emulation of components of the application in isolation;
- emulating component of the application which can be a portion of a function, a complete function or span across multiple functions;
- emulating functions which can be static, instance or virtual;
- emulating values which can be primitives, strings, objects, references or pointers;
- emulating component of the application in a given context whenever requested by advanced fusion analyzer;
- creating an environment around the component of the application using dynamic byte code generation;
- performing analysis of component of the application before execution for ensuring that the component of the application can work in isolation by verifying that there are no missing dependencies;
- controlling the environment to avoid component of the application exceeding predefined execution time and memory usage threshold;
- accepting components of the application which need to be emulated from advanced fusion analyzer;
- passing the emulation analysis results to the advanced fusion analyzer;
- configuration analyzer component comprising means for
- analyzing configuration files used by application server running the application and frameworks used by the application;
- reading the configuration files and creating a model representing the configuration information;
- performing configuration analysis based on type of analysis requested by advanced fusion analyzer;
- passing the configuration model and analysis results to the advanced fusion analyzer;
- instrumentor component comprising means for
- instrumenting the application in order to capture the run-time information of the application when the application is executing in a real environment;
- generating an enhanced byte code or binary based on instrumentation;
- placing number of observers at points determined during analysis without running application such that whenever requested by advanced fusion analyzer information, both at instruction level as well as at flow level, can be captured when the application is running;
- placing modifiers at points determined during analysis without running application if required such that whenever requested by advanced fusion analyzer actual flow of application can be altered or stopped or data can be changed;
- instrumenting only through the static analysis model and uniquely mapping instrumented points within the static analysis model;
- performing instrumentation as per the instructions of advanced fusion analyzer which decides based on coordinated analysis before instrumentation process which points of application need to be instrumented allowing advanced fusion analyzer to analyze the application and instrument only the points which help in gaining new facts further;
- internal run-time analyzer component comprising means for
- participating in multi-way coordination and orchestration process with advanced fusion analyzer;
- capturing run-time information, both at instruction level as well as at flow level, of the application from number of observers placed during instrumentation process;
- capturing the instructions as points which directly map into the static analysis model in advanced fusion analyzer instead of capturing information as instructions with associated signatures;
- providing compact and fast information transfer by capturing the instructions as points and directly mapping into the static analysis model in advanced fusion analyzer;
- avoiding costly resolution process by capturing the instructions as points and directly mapping into the static analysis model in advanced fusion analyzer;
- capturing information as events where an event is represented as a pair of point, either 32 bit or 64 bit, and objects, representing values as applicable;
- separating events per thread for use cases which are multi-threaded;
- providing on-demand transfer of values further compacting and improving performance by only transferring values required during analysis;
- passing primitive and string values as is and passing other reference and pointer values as markers along with address or hash code computed from address;
- providing on-demand remote object comparison of reference or pointer values whenever requested by advanced fusion analyzer;
- providing on-demand remote object drilldown into an array or object whenever requested by advanced fusion analyzer;
- providing on-demand remote object analysis of an object, such as determining run-time type of an object, whenever requested by advanced fusion analyzer;
- changing data or altering or stopping flow of application using corresponding modifier as instructed by advanced fusion analyzer;
- moving into standby mode when not in use and activated by advanced fusion analyzer only when needed, such as during explicit external test around request and response boundary;
- taking complete remote snapshot of all run-time information captured for a particular test by making copy of the events captured whenever requested by advanced fusion analyzer;
- comparing events of different remote snapshots for different test cases in order to determine changes in flow and other information;
- external run-time analyzer component comprising means for
- participating in multi-way coordination and orchestration process with advanced fusion analyzer;
- performing external tests on application;
- performing automated guided testing comprising
- performing http based automation comprising
- using a starting point received from advanced fusion analyzer for creating initial http request;
- sending http request and receiving http response;
- parsing http request and http response with protocol analyzer;
- sending http request structure and http response structure to advanced fusion analyzed for analysis;
- performing further test if requested by advanced fusion analyzer;
- using html and java script analysis to crawl further functionality;
- performing browser based automation comprising
- using a starting point received from advanced fusion analyzer for creating initial browser based request;
- positioning browser state;
- performing action on browser;
- waiting for browser state to refresh;
- analyzing browser document object model before and after;
- sending analysis results to advanced fusion analyzed;
- performing further test if requested by advanced fusion analyzer;
- using document object model analysis to crawl further functionality;
- performing user guided testing comprising
- waiting for user to go over functionality and provide right input data;
- performing further test if requested by advanced fusion analyzer;
- monitoring and analyzing automatic guided testing and user guided testing comprising
- intercepting http request and http response by proxy;
- parsing the http request and http response with protocol analyzer;
- sending the http request structure and http response structure to advanced fusion analyzed for analysis;
- performing automatic modification of payload when retest is requested by advanced fusion analyzer using protocol analyzer which in turn works with proxy for altering the information during transit;
- notifying advanced fusion analyzer of request and response boundaries;
- logical view with guide paths component comprising means for
- performing flow summarization at entire use case level or at individual attribute or value level;
- marking guide paths based on use case level analysis or based on attribute or value level analysis;
- converting information to language neutral format;
- presenting logical view with guide paths information as higher level summary flowchart representing internal logic of application along with analysis and paths for guidance which can be used by user testing for driving new tests;
- passing logical view with guide paths information to fusion analyzer which can be used by automated testing for driving new tests;
- fusion analyzer coordination comprising means for
- performing multi-way coordination and orchestration across components;
- accepting accurate modeling and precise analysis as facts from components and adding them to multi-dimensional model;
- accepting imprecise analysis results along with assumptions from components and placing them in multi-dimensional model;
- accepting reason when analysis is stuck and placing it in multi-dimensional model;
- notifying other components capable of improving or which are stuck based on the new facts;
- performing further analysis by using other components capable of performing analysis based on the assumption;
- modifying assumption based on analysis and notifying component that made assumption;
- performing guided path and guided value analysis in multi-way coordination and orchestration across components;
- components participation comprising means for
- participating in multi-way coordination and orchestration process with advanced fusion analyzer;
- perform on-demand analysis whenever requested by advanced fusion analyzer;
- ensuring facts and assumptions are in different space;
- passing accurate modeling and precise analysis results as facts to fusion analyzer;
- passing imprecise analysis results along with assumptions made to fusion analyzer;
- passing reason when analysis is stuck to fusion analyzer;
- changing analysis state when assumption on which analysis relies is modified by fusion analyzer;
- improving analysis or proceeding from stuck analysis when new fact related to analysis is reported by fusion analyzer;
- analysis without running application step comprising
- separating the application by different platforms and languages;
- invoking the static analyzer to a build a representation of application as a model which is resolved and represents all the components such as types, fields, methods making up the application including all dependent framework, platform and libraries;
- taking the representation of the model of the application from static analyzer;
- invoking configuration analyzer to build configuration model and perform initial analysis on configuration;
- invoking static analyzer to run analysis during multi-way coordination and orchestration process;
- invoking dynamic simulator for modeling behavior or outcomes of different parts of logic during multi-way coordination and orchestration process;
- invoking dynamic emulator for modeling behavior of different components used by application during multi-way coordination and orchestration process;
- performing multi-way coordination and orchestration process across static analyzer, dynamic simulator and dynamic emulator to build and refine the model representing knowledge and behavior of the application;
- instrumentation step comprising
- invoking the instrumentor to instrument the application;
- placing number of observers at points determined during analysis without running application;
- placing modifiers at points determined during analysis without running application if required;
- instrumenting only the points which help in gaining new facts further based on coordinated analysis before instrumentation process;
- analysis with running application step comprising
- invoking external run-time analyzer for performing external tests and external analysis on application during multi-way coordination and orchestration process;
- invoking internal run-time analyzer for capturing run-time information of the application from number of observers during multi-way coordination and orchestration process;
- invoking internal run-time analyzer for altering or stopping flow of application or changing data with modifiers during multi-way coordination and orchestration process if required;
- invoking static analyzer, dynamic simulator and dynamic emulator during multi-way coordination and orchestration process;
- performing multi-way coordination and orchestration process across external run-time analyzer, internal run-time analyzer, static analyzer, dynamic simulator and dynamic emulator to build and refine the model representing knowledge and behavior of the application;
- rules and reporting step comprising
- using rules to further drive the components;
- creating report containing findings and summary based on the analysis performed.

2. The system as claimed in 1 wherein the system is used to find security and quality issues comprising
- performing application security analysis by using security specific rules in rules and reporting step of claim 1;
- performing application quality analysis by using quality specific rules in rules and reporting step of claim 1.

3. The system as claimed in 1 wherein the system further provides capability to analyze application even when real run-time environment of application is not available comprising
- analysis without running application step of claim 1;
- rules and reporting step of claim 1.

4. The system as claimed in 1 wherein the system further uses multiple sub-processes for analysis in which number of sub-processes run simultaneously, each focusing on different area or aspect of the multi-dimensional model and coordinating and orchestrating independently.

## Patentansprüche

1. System zum Bereitstellen einer Plattform zur genauen Analyse von Anwendungen mit Mehrwegkoordinierung und - orchestrierung, wobei das System Folgendes umfasst:
- einen erweiterten Fusionsanalysator, umfassend:
Mittel zum
- Verwenden einer Mehrwegkoordinierung und -orchestrierung über Komponenten zur Analyse einer Anwendung;
- Aufbauen und kontinuierlichen Präzisieren eines mehrdimensionalen Models, das das Wissen und Verhalten der Anwendung als ein Netzwerk von Objekten über verschiedene Dimensionen darstellt;
- Verwenden von begründungsbasierter und lernbasierter Logik in diesem Model, zusammen mit von den Komponenten erhaltenen Informationen und Ereignissen, um sowohl das mehrdimensionale Model weiter zu präzisieren als auch die Komponenten durch Senden von Informationen und Ereignissen an diese weiter anzutreiben;
- Erneutes Verwenden der von den Komponenten als Ergebnis des Antreibens der Komponenten erhaltenen Informationen und Ereignisse, um das gesamte Verfahren weiter auszulösen, bis sich das System stabilisiert;
- eine statische Analysatorkomponente, umfassend:
Mittel zum
- Beteiligen an dem Mehrwegkoordinierungs- und - orchestrierungsverfahren mit dem erweiterten Fusionsanalysator;
- Durchführen einer Analyse von Quellcodes sowie Bytecodes oder Binärdateien;
- Verarbeiten von Quellcode, umfassend:
- Durchführen einer lexikalischen und syntaktischen Analyse von Quellcodes, woraus sich ein Syntaxbaum ergibt, und dann Umwandeln des Syntaxbaums in abstrakte Syntaxbäume;
- Durchführen einer semantischen Analyse, umfassend:
- Sicherstellen, dass das aus abstrakten Syntaxbäumen aufgebaute Programm aus mehreren Quellcodes, die Typen, Variablen und Funktionen enthalten, angemessen definiert ist und sie zusammen ein angemessenes Programm ausdrücken;
- Überwachungstyp, Variablen- und Funktionsdeklarationen und Verwenden durch Durchführung einer Symbolauflösung und angemessener Typüberprüfung;
- Sicherstellen, dass für stark typisierte Sprachen jede Variabel und jeder Ausdruck einen Typ aufweist und dass seine Verwendung entsprechend dem Typsystem korrekt und kompatibel ist;
- Laden und Überprüfen aller voneinander abhängigen Quellcodes, die das Programm bilden;
- Überprüfen und Verifizieren der Verwendung von Bibliotheken durch die Anwendung
- Verarbeiten von Bytecodes oder Binärdateien, umfassend
- Lesen von Bytecodes für die Anwendung, die zu einer Zwischensprache kompiliert wird und Umwandeln in abstrakte Syntaxbäume;
- Lesen von Binärdateien für die Anwendung, die in einen endgültigen resultierenden Maschinencode kompiliert wird, und Umwandeln in abstrakte Syntaxbäume;
- Durchführen einer semantischen Analyse, umfassend:
- Sicherstellen, dass das aus abstrakten Syntaxbäumen aufgebaute Programm aus mehreren Bytecodes, die Typen, Variablen und Funktionen enthalten, angemessen definiert ist und sie zusammen ein angemessenes Programm ausdrücken;
- Überwachungstyp, Variablen- und Funktionsdeklarationen und Verwenden durch Durchführung einer Symbolauflösung und angemessener Typüberprüfung
- Laden und Verlinken aller voneinander abhängigen Bytecodes, die das Programm bilden;
- Überprüfen und Verifizieren der Verwendung von Büchereien durch die Anwendung;
- Auflösen der verfügbaren Anwendung in reine Quellform, reinen Bytecode oder binäre Form oder eine Mischung aus Quell- und Bytecode oder binärer Form unter Verwendung eines gemischten Resolvers;
- Auflösen aller abhängigen Büchereien;
- Durchführen der lexikalischen Analyse, syntaktischen Analyse, des Lesens von Bytecodes oder Binärdateien, der semantischen Analyse im Anschluss an eine Sprachspezifikation und eine virtuelle oder reale Maschinenspezifikation;
- Darstellen der Anwendung als ein System, das aufgelöst ist und alle Komponenten der Anwendung darstellt, wie etwa Typen, Felder, Verfahren, die die Anwendung bilden, einschließlich aller abhängigen Büchereien;
- Durchführen einer Steuerflussanalyse durch Aufbauen eines Steuerflussgraphen und Aufrufgraphen;
- gegebenenfalls Ermitteln von Fakten unter Verwendung von Sprachspezifikation und virtueller oder realer Maschinenspezifikation zusammen mit Auflösung und Typen;
- Darstellen des Models der Anwendung als Fakten an dem erweiterten Fusionsanalysator;
- gegebenenfalls Datenflussanalyse;
- Durchführen einer Taint-Analyse und Modelüberprüfung, wenn durch den erweiterten Fusionsanalysator angefordert;
- Durchführen einer Typsystemanalyse oder Verwenden von Einschränkungsauflösung, Theorembeweisen oder anderen Ansätzen, um gegebenenfalls zusätzliche Fakten zu ermitteln;
- Weitergeben von Analyseergebnissen an den erweiterten Fusionsanalysator;
- Durchführen einer Analyse, wenn durch den erweiterten Fusionsanalysator angefordert;
- eine dynamische Simulationskomponente, umfassend:
Mittel zum
- Teilnehmen an dem Mehrwegkoordinierungs- und - orchestrierungsverfahren mit dem erweiterten Fusionsanalysator;
- Modellieren von dem Verhalten oder den Ergebnissen von verschiedenen Teilen der Logik;
- Simulieren eines Teils einer Logik, der ein Teil einer Funktion, eine vollständige Funktion oder ein Bereich über mehrere Funktionen sein kann;
- Simulieren von Funktionen, die statische oder virtuelle Funktionen oder Instanzen-Funktionen sein können;
- Simulieren von Werten, die Grundelemente, Zeichenfolgen, Objekte, Referenzen, Zeiger oder symbolische Werte sein können;
- Simulieren eines Teils einer Logik in einem gegebenen Kontext, wenn durch den erweiterten Fusionsanalysator angefordert;
- Kontrollieren der Umgebung, um zu verhindern, dass die Logik eine vordefinierte Ausführungszeit und einen Speichernutzungsschwellenwert überschreitet;
- Annehmen von Teilen einer zu simulierenden Logik von dem erweiterten Fusionsanalysator;
- Weitergeben der Simulationsanalyseergebnisse an den erweiterten Fusionsanalysator;
- eine dynamische Emulationskomponente, umfassend:
Mittel zum
- Teilnehmen an dem Mehrwegkoordinierungs- und - orchestrierungsverfahren mit dem erweiterten Fusionsanalysator
- Modellieren von dem Verhalten verschiedener Komponenten der Anwendung;
- Verwenden einer virtuellen Maschine zum Durchführen einer Emulierung von isolierten Komponenten der Anwendung;
- Emulieren einer Komponente der Anwendung, die ein Teil einer Funktion, eine vollständige Funktion oder ein Bereich über mehrere Funktionen sein kann;
- Emulieren von Funktionen, die statische oder virtuelle Funktionen oder Instanzen-Funktionen sein können;
- Emulieren von Werten, die Grundelemente, Zeichenfolgen, Objekte, Referenzen oder Zeiger sein können;
- Emulieren einer Komponente der Anwendung in einem gegebenen Kontext, wenn durch den erweiterten Fusionsanalysator angefordert;
- Schaffen einer Umgebung um die Komponente der Anwendung unter Verwendung von dynamischer Bytecodegenerierung;
- Durchführen einer Analyse einer Komponente der Anwendung vor der Ausführung, um sicherzustellen, dass die Komponente der Anwendung isoliert arbeiten kann, durch Verifizieren, dass keine fehlenden Abhängigkeiten vorliegen;
- Steuerung der Umgebung, um zu verhindern, dass eine Komponente der Anwendung eine vordefinierte Ausführungszeit und einen Speichernutzungsschwellenwert überschreitet;
- Annehmen von zu emulierenden Komponenten der Anwendungen von dem erweiterten Fusionsanalysator;
- Weitergeben der Emulationsanalyseergebnisse an den erweiterten Fusionsanalysator;
- eine Konfigurationsanalysekomponente, umfassend:
Mittel zum
- Analysieren von durch den Anwendungsserver, der die Anwendung ausführt, verwendeten Konfigurationsdateien und von durch die Anwendung verwendeten Frameworks;
- Lesen der Konfigurationsdateien und Schaffen eines Models, das die Konfigurationsinformationen darstellt;
- Durchführen einer Konfigurationsanalyse auf Grundlage des Typs der durch den erweiterten Fusionsanalysator angeforderten Analyse;
- Weitergeben des Konfigurationsmodels und der Analyseergebnisse an den erweiterten Fusionsanalysator;
- Instrumentorkomponente, umfassend:
Mittel zum
- Instrumentieren der Anwendungen, um die Laufzeitinformationen der Anwendung zu erfassen, wenn die Anwendung in einer realen Umgebung ausgeführt wird;
- Generieren eines erweiterten Bytecodes oder einer erweiterten Binärdatei auf Grundlage der Instrumentierung;
- Platzieren einer Reihe von Beobachtern an Punkten, die bei einer Analyse ohne laufende Anwendung bestimmt wurden, sodass sowohl auf Befehlsebene als auch auf der Laufebene Informationen bei laufender Anwendung erfasst werden können, wenn dies durch den erweiterten Fusionsanalysator angefordert wird;
- Gegebenenfalls Platzieren von Modifikatoren an Punkten, die bei der Analyse ohne laufende Anwendung bestimmt wurden, sodass der tatsächliche Fluss der Anwendung geändert oder unterbrochen werden kann oder Daten verändert werden können, wenn dies durch den erweiterten Fusionsanalysator angefordert wird;
- Instrumentieren nur durch das statische Analysemodel und einzigartige Zuordnung von instrumentierten Punkten in dem statischen Analysemodel;
- Durchführen einer Instrumentierung entsprechend der Befehle des erweiterten Fusionsanalysators, der auf Grundlage von koordinierter Analyse vor dem Instrumentierungsverfahren entscheidet, welche Punkte der Anwendung instrumentiert werden müssen, wodurch es dem erweiterten Fusionsanalysator ermöglicht wird, die Anwendung zu analysieren und nur die Punkte zu instrumentieren, die das weitere Erlangen von neuen Fakten unterstützen;
- interne Laufzeitanalysatorkomponente, umfassend:
Mittel zum
- Teilnehmen an dem Mehrwegkoordinierungs- und - orchestrierungsverfahren mit dem erweiterten Fusionsanalysator;
- Erfassen von Laufzeitinformationen der Anwendung, sowohl auf Befehlsebene als auch auf der Flussebene, von der Reihe von Beobachtern, die während dem Instrumentierungsverfahren platziert wurden;
- Erfassen der Befehle als Punkte, die dem statischen Analysemodel in dem erweiterten Fusionsanalysator direkt zuzuordnen sind, anstatt Informationen als Befehle mit assoziierten Signaturen zu erfassen;
- Bereitstellen einer kompakten und schnellen Informationsübertragung durch Erfassung der Befehle als Punkte und direkte Zuordnung in dem statistischen Analysemodel in dem erweiterten Fusionsanalysator;
- Vermeiden von kostspieligen Auflösungsverfahren durch Erfassung der Befehle als Punkte und direkte Zuordnung in dem statistischen Analysemodel in dem erweiterten Fusionsanalysator;
- gegebenenfalls Erfassen von Informationen als Ereignisse, wobei ein Ereignis entweder als ein 32-Bit-oder als ein 64-Bit-Punktpaar dargestellt wird, und als Objekte, die Werte darstellen;
- Trennen von Ereignissen pro Thread für Multithread-Anwendungsfälle;
- Bereitstellen von Abruf-Übertragung von Werten, wobei die Leistung weiter kompaktiert und verbessert wird, indem nur die während der Analyse benötigten Werte übertragen werden;
- Weitergeben von Grund- und Zeichenfolgenwerten in der vorliegenden Form und Weitergeben anderer Referenz- und Zeigerwerte als Marker, zusammen mit einer Adresse oder einem Hashcode, der aus der Adresse berechnet wurde;
- Bereitstellen eines Abruf-Remoteobjektvergleiches von Referenz- oder Zeigerwerten, wenn durch den erweiterten Fusionsanalysator angefordert;
- Bereitstellen eines Abruf-Remoteobjektdrilldowns in ein Feld oder Objekt, wenn durch den erweiterten Fusionsanalysator angefordert;
- Bereitstellen einer Abruf-Remoteobjektanalyse eines Objekts, wie etwa Bestimmen des Laufzeittyps eines Objekts, wenn durch den erweiterten Fusionsanalysator angefordert;
- Verändern von Daten oder Ändern und Unterbrechen des Flusses einer Anwendung unter Verwendung eines entsprechenden Modifikators nach Befehl des erweiterten Fusionsanalysators;
- Wechseln in den Standby-Modus bei Nichtgebrauch und Aktivieren durch den erweiterten Fusionsanalysator nur bei Bedarf, wie etwa während expliziter externer Prüfung um eine Anforderungs- und Antwortgrenze herum;
- Erstellen eines vollständigen Remote-Schnappschusses aller Laufzeitinformationen, die für eine bestimmte Prüfung erfasst wurden, durch Kopieren der erfassten Ereignisse, wenn durch den erweiterten Fusionsanalysator angefordert;
- Vergleichen von Ereignissen verschiedener Remote-Schnappschüsse für verschiedene Prüffälle, um Flussänderungen und andere Informationen zu bestimmen;
- externe Laufzeitanalysatorkomponente, umfassend:
Mittel zum
- Teilnehmen an dem Mehrwegkoordinierungs- und - orchestrierungsverfahren mit dem erweiterten Fusionsanalysator;
- Durchführen von externen Prüfungen an der Anwendung;
- Durchführen von automatisierten geführten Prüfungen, umfassend:
- Durchführen einer http-basierter Automatisierung, umfassend:
- Verwenden eines von dem erweiterten Fusionsanalysator erhaltenen Startpunkts zum Erstellen einer ersten http-Anforderung;
- Senden der http-Anforderung und Erhalten einer http-Antwort;
- Parsen der http-Anforderung und der http-Antwort mit einem Protokollanalysator;
- Senden einer http-Anforderungsstruktur und einer http-Antwortstruktur zur Analyse an den erweiterten Fusionsanalysator;
- Durchführen einer weiteren Prüfung, wenn durch den erweiterten Fusionsanalysator angefordert;
- Verwenden einer html-Script- und Java-Script-Analyse, um die Funktionalität zu erweitern;
- Durchführen einer browserbasierten Automatisierung, umfassend:
- Verwenden eines von dem erweiterten Fusionsanalysator erhaltenen Startpunkts zum Erstellen einer ersten browserbasierten Anforderung;
- Positionieren eines Browserstatus;
- Durchführen einer Aktion auf einem Browser;
- Warten auf das Aktualisieren des Browserstatus;
- Analysieren eines Browserdokumentobjektmodels davor und danach;
- Senden der Analyseergebnisse an den erweiterten Fusionsanalysator;
- Durchführen weiterer Prüfungen, wenn durch den erweiterten Fusionsanalysator angefordert;
- Verwenden einer Dokumentobjektmodelanalyse, um die Funktionalität zu erweitern;
- Durchführen benutzergeführter Prüfungen, umfassend:
- Warten, dass der Benutzer eine Funktionalität auswählt und die richtigen Eingabedaten bereitstellt;
- Durchführen weiterer Prüfungen, wenn durch den erweiterten Fusionsanalysator angefordert;
- Überwachen und Analysieren automatischer geführter Prüfungen und benutzergeführter Prüfungen, umfassend:
- Abfangen der http-Anforderung und der http-Antwort durch einen Proxy;
- Parsen der http-Anforderung und der http-Antwort mit dem Protokollanalysator;
- Senden der http-Anforderungsstruktur und der http-Antwortstruktur zur Analyse an den erweiterten Fusionsanalysator;
- Durchführen einer automatischen Modifikation der Nutzlast, wenn eine Wiederholungsprüfung durch den erweiterten Fusionsanalysator angefordert wird, unter Verwendung des Protokollanalysators, der zum Ändern der Informationen während der Übertragung mit dem Proxy zusammenarbeitet;
- Benachrichtigen des erweiterten Fusionsanalysators über die Anforderungs- und Antwortgrenzen;
- eine logische Ansicht mit einer Führungsbahnenkomponente, umfassend:
Mittel zum
- Durchführen einer Flusszusammenfassung auf der Ebene des gesamten Anwendungsfalls oder auf der Ebene eines einzelnen Attributs oder Werts;
- Kennzeichnen von Führungsbahnen auf Grundlage einer Analyse auf Ebene des Anwendungsfalls oder auf Grundlage einer Analyse auf Ebene eines Attributs oder Werts;
- Konvertieren der Informationen in ein sprachneutrales Format;
- Darstellen der Informationen der logischen Ansicht mit Führungsbahnen, die zur Benutzerprüfung zum Ausführen neuer Prüfungen verwendet werden können, als ein zusammenfassendes Flussdiagramm auf höherer Ebene, das die interne Logik der Anwendung zusammen mit der Analyse und den Bahnen zur Führung darstellt;
- Weitergeben von Informationen der logischen Ansicht mit Führungsbahnen, die durch automatisierte Prüfungen zum Ausführen neuer Prüfungen verwendet werden können, an den Fusionsanalysator;
- eine Fusionsanalysekoordination, umfassend:
Mittel zum
- Durchführen der Mehrwegkoordinierung und - orchestrierung über Komponenten;
- Annehmen akkurater Modellierung und präziser Analyse als Fakten von Komponenten und Hinzufügen dieser zu einem mehrdimensionalen Model;
- Annehmen ungenauer Analyseergebnisse zusammen mit Annahmen von Komponenten und Platzieren dieser in dem mehrdimensionalen Model;
- Annehmen einer begründeten Annahme, wenn die Analyse nicht fortgesetzt werden kann, und Platzieren in dem mehrdimensionalen Model;
- Benachrichtigen anderer Komponenten, die sich verbessern können oder die nicht fortgesetzt werden können, auf Grundlage der neuen Fakten;
- Durchführen einer weiteren Analyse unter Verwendung von anderen Komponenten, die auf Grundlage der Annahme eine Analyse durchführen können;
- Modifizieren der Annahme auf Grundlage der Analyse und Benachrichtigen der Komponente, die die Annahme gemacht hat;
- Durchführen einer geführten Bahnanalyse und einer geführten Wertanalyse in der Mehrwegkoordinierung und - orchestrierung über Komponenten;
- Komponententeilnahme, umfassend:
Mittel zum
- Teilnehmen an dem Mehrwegkoordinierungs- und - orchestrierungsverfahren mit dem erweiterten Fusionsanalysator;
- Durchführen von Abruf-Analyse, wenn durch den erweiterten Fusionsanalysator angefordert;
- Sicherstellen, dass die Fakten und Annahmen an verschiedenem Ort sind;
- Weitergeben einer akkuraten Modellierung und präziser Analyseergebnisse als Fakten an den Fusionsanalysator;
- Weitergeben unpräziser Analyseergebnisse zusammen mit gemachten Annahmen an den Fusionsanalysator;
- Weitergeben von begründeten Annahmen an den Fusionsanalysator, wenn die Analyse nicht fortgesetzt werden kann;
- Ändern des Analysestatus, wenn die Annahme, auf der die Analyse beruht, durch den Fusionsanalysator modifiziert wird;
- Verbessern der Analyse oder Fortfahren von der nicht fortsetzbaren Analyse, wenn ein neuer Fakt in Bezug auf die Analyse durch den Fusionsanalysator gemeldet wird;
- einen Analyseschritt ohne laufende Anwendung, umfassend:
- Trennen der Anwendung durch verschiedene Plattformen und Sprachen;
- Aufrufen des statischen Analysators, um eine Darstellung einer Anwendung als ein Model aufzubauen, das aufgelöst wird und alle Komponenten darstellt, wie etwa Typen, Felder, Verfahren, die die Anwendung bilden, einschließlich aller abhängigen Frameworks, Plattformen und Büchereien;
- Übernehmen der Darstellung des Models der Anwendung von dem statischen Analysator;
- Aufrufen des Konfigurationsanalysators, um ein Konfigurationsmodel aufzubauen und eine erste Analyse der Konfiguration durchzuführen;
- Aufrufen des statischen Analysators, um eine Analyse während dem Mehrwegkoordinierungs- und - orchestrierungsverfahren auszuführen;
- Aufrufen des dynamischen Simulators zur Modellierung des Verhaltens oder den Ergebnissen der verschiedenen Teile der Logik währen dem Mehrwegkoordinierungs- und -orchestrierungsverfahren;
- Aufrufen des dynamischen Emulators zur Modellierung des Verhaltens verschiedener Komponenten, die während dem Mehrwegkoordinierungs- und -orchestrierungsverfahren von der Anwendung verwendet werden;
- Durchführen des Mehrwegkoordinierungs- und - orchestrierungsverfahrens über den statischen Analysierer, dynamischen Simulator und dynamischen Emulator, um das Model, dass das Wissen und Verhalten der Anwendung darstellt, aufzubauen und zu präzisieren;
- einen Instrumentierungsschritt, umfassend;
- Aufrufen des Instrumentors, um die Anwendung zu instrumentieren;
- Platzieren der Reihe von Beobachtern an den Punkten, die bei der Analyse ohne laufende Anwendung bestimmt wurden;
- Gegebenenfalls Platzieren der Modifikatoren an den Punkten, die bei der Analyse ohne laufende Anwendung bestimmt wurden;
- Instrumentieren von nur den Punkten, die das weitere Erlangen von neuen Fakten auf Grundlage der koordinierten Analyse vor dem Instrumentierungsvorgang unterstützen;
- einen Analyseschritt ohne laufende Anwendung, umfassend:
- Aufrufen des externen Laufzeitanalysators zum Durchführen externer Prüfungen und einer externen Analyse an der Anwendung während dem Mehrwegkoordinierungs- und -orchestrierungsverfahren
- Aufrufen des internen Laufzeitanalysators zum Erfassen von Laufzeitinformationen der Anwendung von der Reihe von Beobachtern während dem Mehrwegkoordinierungs- und - orchestrierungsverfahren;
- Gegebenenfalls Aufrufen des internen Laufzeitanalysators zur Änderung oder Unterbrechung des Flusses der Anwendung oder zur Veränderung von Daten während dem Mehrwegkoordinierungs- und -orchestrierungsverfahren;
- Aufrufen des statischen Analysators, dynamischen Simulators und dynamischen Emulators während dem Mehrwegkoordinierungs- und -orchestrierungsverfahren;
- Durchführen des Mehrwegkoordinierungs- und - orchestrierungsverfahrens über den externen Laufzeitanalysator, internen Laufzeitanalysator, statischen Analysator, dynamischen Simulator und dynamischen Emulator, um das Model, das das Wissen und Verhalten der Anwendung darstellt, aufzubauen und zu präzisieren;
- einen Regelungs- und Berichterstattungsschritt, umfassend:
- Verwenden von Regeln, um die Komponenten weiter anzutreiben;
- Erstellen eines Berichts, der Erkenntnisse und eine Zusammenfassung auf Grundlage der durchgeführten Analyse enthält.

2. System nach Anspruch 1, wobei das System verwendet wird, um Sicherheits- und Qualitätsprobleme aufzufinden, umfassend;
- Durchführen einer Anwendungssicherheitsanalyse unter Verwendung von sicherheitsspezifischen Regeln in dem Regelungs- und Berichterstattungsschritt nach Anspruch 1;
- Durchführen einer Anwendungsqualitätsanalyse unter Verwendung von qualitätsspezifischen Regeln in dem Regelungs- und Berichterstattungsschritt nach Anspruch 1.

3. System nach Anspruch 1, wobei das System ferner die Fähigkeit, eine Anwendung zu analysieren, bereitstellt, sogar, wenn eine Echtzeitumgebung der Anwendung nicht verfügbar ist, umfassend:
- einen Analyseschritt ohne laufende Anwendung nach Anspruch 1;
- einen Regelungs- und Berichterstattungsschritt nach Anspruch 1.

4. System nach Anspruch 1, wobei das System ferner mehrere Nebenverfahren zur Analyse verwendet, in denen eine Reihe von Nebenverfahren gleichzeitig ablaufen, wobei jedes auf einen bestimmten Bereich oder Aspekt des Mehrwegkoordinierungs- und - orchestrierungsverfahrens unabhängig von dem jeweils anderen ausgerichtet ist.

## Revendications

1. Système servant à fournir une plate-forme permettant d'analyser des applications présentant une technique de coordination et d'orchestration à voies multiples, le système comprenant
- un analyseur de fusion évolué comprenant des moyens pour
- utiliser une technique de coordination et d'orchestration à voies multiples sur l'ensemble des composants pour analyser l'application ;
- construire et affiner de manière continue un modèle multidimensionnel représentant une connaissance et un comportement de l'application sous la forme d'un réseau d'objets à travers différentes dimensions ;
- utiliser une logique de raisonnement et d'apprentissage sur ce modèle ainsi que des informations et des événements provenant des composants pour à la fois affiner encore le modèle multidimensionnel ainsi que pour commander encore les composants en leur envoyant des informations et des événements ;
- utiliser de nouveau les informations et les événements provenant des composants après avoir amené les composants à déclencher de nouveau l'ensemble du processus jusqu'à ce que le système se stabilise ;
- un composant d'analyseur statique comprenant des moyens pour
- participer à un procédé de coordination et d'orchestration à voies multiples avec un analyseur de fusion évolué ;
- effectuer une analyse des codes sources ainsi que des codes bytes ou des binaires ;
- traiter le code source consistant à
- effectuer l'analyse lexicale et l'analyse syntaxique des codes sources résultant en un arbre syntaxique en ensuite transformer l'arbre syntaxique en des arbres de syntaxe abstraits ;
- effectuer l'analyse sémantique consistant à
- s'assurer que le programme composé d'arbres de syntaxe abstraits à partir de multiples codes sources contenant des types, des variables et des fonctions est défini correctement et qu'ensemble, ils expriment un programme approprié ;
- suivre les déclarations et l'usage des types, des variables et des fonctions en effectuant une résolution de symbole et la vérification de type appropriée ;
- s'assurer que pour des langages fortement typés, chaque variable et chaque expression possède un type et que son usage est correct et compatible selon le système de type ;
- charger et vérifier tous les codes sources interdépendants constituant le programme ;
- contrôler et vérifier l'usage de bibliothèques par application ;
- traiter des codes bytes ou des binaires consistant à
- lire des codes bytes pour une application qui est compilée en un langage intermédiaire et transformer en des arbres de syntaxe abstraits ;
- lire des binaires pour une application qui est compilée en un code machine final résultant et se transformant en des arbres de syntaxe abstraits ;
- effectuer une analyse sémantique consistant à
- s'assurer que le programme composé d'arbres de syntaxe abstraits depuis de multiples codes bytes contenant des types, des variables et des fonctions est défini correctement et qu'ensemble, ils expriment un programme approprié ;
- suivre les déclarations et l'usage des types, des variables et des fonctions en effectuant une résolution de symbole et la vérification de type approprié ;
- charger et relier tous les codes bytes interdépendants constituant le programme ;
- contrôler et vérifier l'usage de bibliothèques par application ;
- résoudre une application disponible sous forme de source pure, de code byte pur ou de forme binaire ou d'un mélange d'à la fois source et code byte ou forme binaire en utilisant un résolveur mixte ;
- résoudre toutes les bibliothèques dépendantes ;
- effectuer l'analyse lexicale, l'analyse syntaxique, lire les codes bytes ou les binaires, l'analyse sémantique suivant une spécification de langage et une spécification de machine virtuelle ou réelle ;
- représenter une application comme un modèle qui est résolu et représente tous les composants de l'application tels que les types, les domaines et les procédés constituant l'application y compris toutes les bibliothèques dépendantes ;
- effectuer l'analyse des flux de commande en construisant un graphe des flux de commande et un graphe d'appels ;
- établir des faits comme requis en utilisant une spécification de langage et une spécification de machine virtuelle ou réelle ainsi qu'une résolution et des types ;
- représenter le modèle de l'application sur un analyseur de fusion évolué comme des faits ;
- effectuer une analyse des flux de données selon les exigences ;
- effectuer une analyse d'altération un contrôle de modèle sur demande d'un analyseur de fusion évolué ;
- effectuer une analyse de système de type ou utiliser une résolution de contraintes, une preuve de théorème ou d'autres approches pour établir des faits supplémentaires comme requis ;
- passer des résultats d'analyse à un analyseur de fusion évolué ;
- effectuer une analyse sur demande par un analyseur de fusion évolué ;
- un composant de simulateur dynamique comprenant des moyens pour
- participer à un processus de coordination et d'orchestration à voies multiples avec un analyseur de fusion évolué ;
- modéliser le comportement ou les résultats provenant de différentes parties d'une logique ;
- simuler une partie de logique qui peut être une partie d'une fonction, une fonction complète ou recouvrant des fonctions multiples ;
- simuler des fonctions qui peuvent être statiques, d'instance ou virtuelles ;
- simuler des valeurs qui peuvent être des primitives, des chaînes, des objets, des références, des pointeurs ou des valeurs symboliques ;
- simuler une partie de logique dans un contexte donné sur demande par un analyseur de fusion évolué ;
- commander l'environnement pour éviter qu'une logique n'excède un temps d'exécution prédéterminé et un seuil d'usage de mémoire ;
- accepter des parties de logique qui doivent être simulées depuis un analyseur de fusion évolué ;
- passer les résultats d'analyse de simulation à l'analyseur de fusion évolué ;
- un composant d'émulation dynamique comprenant des moyens pour
- participer à un processus de coordination et d'orchestration à voies multiples avec un analyseur de fusion évolué ;
- modéliser le comportement de différents composants de l'application ;
- utiliser une machine virtuelle pour effectuer une émulation de composants de l'application de manière isolée ;
- émuler un composant de l'application qui peut être une partie d'une fonction, une fonction complète ou recouvrant des fonctions multiples ;
- émuler des fonctions qui peuvent être statiques, d'instance ou virtuelles ;
- émuler des valeurs qui peuvent être des primitives, des chaînes, des objets, des références ou des pointeurs ;
- émuler un composant de l'application dans un contexte donné sur demande par un analyseur de fusion évolué ;
- créer un environnement autour du composant de l'application en utilisant une génération dynamique de code byte ;
- effectuer une analyse d'un composant de l'application avant l'exécution pour s'assurer que le composant de l'application peut fonctionner de manière isolée en vérifiant qu'il ne manque pas de dépendance ;
- commander l'environnement pour éviter que le composant de l'application n'excède un temps d'exécution prédéfini et un seuil d'usage de mémoire ;
- accepter des composants de l'application qui doivent être émulés depuis un analyseur de fusion évolué ;
- passer les résultats d'analyse d'émulation à l'analyseur de fusion évolué ;
- un composant d'analyseur de configuration comprenant des moyens pour
- analyser les dossiers de configuration utilisés par un serveur d'application exécutant l'application et les structures utilisées par l'application ;
- lire les dossiers de configuration et créer un modèle représentant les informations de configuration ;
- effectuer une analyse de configuration en fonction du type d'analyse requise par un analyseur de fusion évolué ;
- passer le modèle de configuration et les résultats d'analyse à l'analyseur de fusion évolué ;
- un composant d'instrument comprenant des moyens pour instrumenter l'application de façon à capturer les informations de temps de fonctionnement de l'application lorsque l'application s'exécute dans un environnement réel ;
- générer un code byte ou un binaire amélioré en fonction de l'instrumentation ;
- placer un certain nombre d'observateurs à des points déterminés pendant l'analyse sans exécuter une application, de sorte que lorsque requis par des informations d'analyseur de fusion évolué, à la fois au niveau de l'instruction ainsi qu'au niveau de flux, on puisse les capturer lorsque l'application s'exécute ;
- placer des modificateurs à des points déterminés pendant l'analyse sans exécuter une application si requise, de sorte que lorsque requis par l'analyseur de fusion évolué, un flux réel d'application puisse être altéré or stoppé ou les données puissent être changées ;instrumenter seulement à travers le modèle d'analyse statique et cartographier de manière unique des points instrumentés à l'intérieur du modèle d'analyse statique ;
- effectuer une instrumentation selon les instrumentations d'un analyseur de fusion évolué qui décide en fonction d'une analyse coordonnée avant un procédé d'instrumentation quels points d'application doivent être instrumentés en permettant à un analyseur de fusion évolué d'analyser l'application et d'instrumenter seulement les points qui aident à gagner de nouveaux faits supplémentaires ;
- un composant d'analyseur de temps d'exécution interne comprenant des moyens pour
- participer à un processus de coordination et d'orchestration à voies multiples avec un analyseur de fusion évolué ;
- capturer des informations de durée d'exploitation, à la fois au niveau de l'instruction et au niveau du flux, de l'application à partir d'un certain nombre d'observateurs placés pendant le processus d'instrumentation ;
- capturer les instructions comme des points qui cartographient directement à l'intérieur du modèle d'analyse statique dans un analyseur de fusion évolué au lieu de capturer les informations sous forme d'instructions avec des signatures associées ;effectuer un transfert d'informations compact et rapide en capturant les instructions sous forme de points et en cartographiant directement à l'intérieur du modèle d'analyse statique dans un analyseur de fusion évolué ;
- éviter un processus de résolution coûteux en capturant les instructions sous forme de points en cartographiant directement à l'intérieur du modèle d'analyse statique dans un analyseur de fusion évolué ;
- capturer les informations sous forme d'événements où un événement est représenté sous forme d'une paire de points, soit 32 bits soit 64 bits, et d'objets, représentant des valeurs telles qu'applicables ;
- séparer des événements par file pour des cas d'utilisation qui sont multi-files ;
- fournir un transfert de valeurs sur demande compactant et améliorant en outre des performances en transférant seulement des valeurs requises pendant l'analyse ;
- passer des valeurs primitives et de chaîne telles quelles et passer d'autres valeurs de référence et de pointeur comme marqueurs ainsi qu'une adresse ou un code de hachage calculé depuis l'adresse ;
- fournir des valeurs de comparaison d'objet à distance sur demande de référence ou de pointeur sur demande par un analyseur de fusion évolué ;
- fournir un zoom avant d'objet à distance sur demande dans une matrice ou un objet à chaque fois que le demande l'analyseur de fusion avancé ;
- fournir une analyse d'objet à distance sur demande, tel que déterminer le type de temps d'exécution d'un objet, sur demande par un analyseur de fusion évolué ;
- changer les données ou altérer ou stopper le flux d'application en utilisant un modificateur correspondant conformément à un analyseur de fusion évolué ;
- passer en mode veille lorsque non utilisé et activé par un analyseur de fusion évolué seulement lorsqu'on en a besoin, tel que pendant un test externe explicite autour d'une limite de requête et de réponse ;
- prendre un cliché instantané à distance complet de toute les informations de temps d'exécution capturées pour un test particulier en faisant une copie des événements capturés sur demande par un analyseur de fusion évolué ;
- comparer des événements de différents clichés instantanés à distance pour différents cas de tests de façon à déterminer des changements dans le flux et d'autres informations ;
- un composant analyseur de temps d'exécution externe comprenant des moyens pour
- participer à un processus de coordination et d'orchestration à voies multiples avec un analyseur de fusion évolué ;
- effectuer des tests externe sur une application ;
- effectuer des tests guidés automatisés consistant à
- effectuer une automatisation basée sur le http consistant à
- utiliser un point de départ reçu depuis un analyseur de fusion évolué pour créer une requête http initiale ;
- envoyer une requête http et recevoir une réponse http ;
- analyser une requête http et une réponse http avec un analyseur de protocole ;
- envoyer une structure de requête http et une structure de réponse http à un analyseur de fusion évolué pour une analyse ;
- effectuer des tests supplémentaires si un analyseur de fusion évolué le demande ;
- utiliser une analyse de script java et html pour trouver une autre fonctionnalité ;
- effectuer une automatisation fondée sur un navigateur consistant à
- utiliser un point de départ reçu depuis un analyseur de fusion évolué pour créer une requête initiale basée sur un navigateur ;
- positionner l'état du navigateur ;
- effectuer une action sur le navigateur ;
- attendre que l'état du navigateur rafraîchisse ;
- analyser le modèle d'objet de document du navigateur avant et après ;
- envoyer les résultats d'analyse à un analyseur de fusion évolué ;
- effectuer d'autres tests si un analyseur de fusion évolué le demande ;
- utiliser une analyse du modèle d'objet de document pour trouver une autre fonctionnalité ;
- effectuer un test guidé par l'utilisateur consistant à
- attendre que l'utilisateur vérifie la fonctionnalité et fournisse des données d'entrée correctes ;
- effectuer d'autres tests si un analyseur de fusion évolué le demande ;
- surveiller et analyser un test guidé automatique et un test guidé par l'utilisateur consistant à
- intercepter une requête http et une réponse http par un serveur mandataire ;
- analyser la requête http et la réponse http avec un analyseur de protocole ;
- envoyer la structure de requête http et la structure de réponse http à un analyseur de fusion évolué pour une analyse ;
- effectuer une modification automatique de la charge utile lorsqu'un nouveau test est requis par un analyseur de fusion évolué en utilisant un analyseur de protocole qui de son côté fonctionne avec un serveur mandataire pour altérer les informations pendant leur transit ;
- notifier un analyseur de fusion évolué de limites de requête et de réponse ;
- une vue logique avec des composants de voie de guidage comprenant des moyens pour
- effectuer la somme du flux à un niveau de cas d'utilisation entier ou à un niveau individuel d'attribut ou de valeur ;
- marquer les voies de guidage en fonction de l'emploi d'une analyse de niveau de cas ou en fonction de l'analyse de niveau d'attribut ou de valeur ;
- convertir les informations en un format neutre de langage ;
- présenter une vue logique avec des informations de voie de guidage comme un organigramme de synthèse de niveau supérieur représentant une logique interne d'application ainsi qu'une analyse et des voies de guidage qui peuvent être utilisées par un utilisateur en train de tester pour effectuer de nouveaux tests ;
- passer une vue logique avec des informations de voie de guidage à un analyseur de fusion qui peut être utilisé par un essai automatisé pour effectuer de nouveaux tests ;
- une coordination d'analyseur de fusion comprenant des moyens pour
- effectuer un processus de coordination et d'orchestration à l'ensemble des composants ;
- accepter une modélisation fiable et une analyse précise comme des faits depuis des composants et les ajouter à un modèle multidimensionnel ;
- accepter des résultats d'analyse imprécis ainsi que des hypothèses depuis des composants et les placer dans un modèle multidimensionnel ;
- accepter une raison lorsque l'analyse est coincée et la placer dans un modèle multidimensionnel ;
- notifier d'autres composants capables d'améliorer ou qui sont coincés en fonction de faits nouveaux ;
- effectuer une analyse supplémentaire en utilisant d'autres composants capables d'effectuer une analyse en fonction de l'hypothèse ;
- modifier une hypothèse en fonction d'une analyse et notifier un composant qui a fait l'hypothèse ;
- effectuer un chemin guidé et une analyse de valeur guidée dans un processus de coordination et d'orchestration pour l'ensemble des composants ;
- une participation de composants comprenant des moyens pour
- participer à un processus de coordination et d'orchestration à voies multiples avec un analyseur de fusion évolué ;
- effectuer une analyse à la demande quand un analyseur de fusion évolué le demande ;
- s'assurer que les faits et les hypothèses sont dans un espace différent ;
- passer une modélisation fiable et des résultats d'analyse précis comme des faits à un analyseur de fusion ;
- faire passer des résultats d'analyse imprécis ainsi que des hypothèses faites à un analyseur de fusion ;
- faire passer une raison lorsque l'analyse est retenue par un analyseur de fusion ;
- changer un état d'analyse lorsqu'une hypothèse sur laquelle une analyse repose est modifiée par un analyseur de fusion ;
- améliorer une analyse ou procéder depuis une analyse retenue lorsqu'un fait nouveau relatif à l'analyse est rapporté par un analyseur de fusion ;
- une analyse sans exécuter l'étape d'application consistant à
- séparer l'application par différentes plates-formes et langages ;
- invoquer l'analyseur statique pour construire une représentation d'une application comme modèle qui est résolu et qui représente tous les composants tels que des types, des domaines, des procédés constituant l'application comprenant toutes les structures, les plateformes et les bibliothèques dépendantes ;
- prendre la représentation du modèle de l'application depuis un analyseur statique ;
- invoquer l'analyseur de configuration pour construire un modèle de configuration et pour effectuer une analyse initiale sur une configuration ;
- invoquer l'analyseur statique pour exécuter une analyse pendant le processus de coordination et d'orchestration à voies multiples ;
- invoquer un simulateur dynamique pour modéliser un comportement ou des résultats de différentes parties de logique pendant un processus de coordination et d'orchestration à voies multiples ;
- invoquer un émulateur dynamique pour modéliser un comportement de différents composants utilisés par une application pendant un processus de coordination et d'orchestration à voies multiples ;
- effectuer un processus de coordination et d'orchestration à voies multiples sur l'ensemble de l'analyseur statique, du simulateur dynamique et de l'émulateur dynamique pour construire et pour affiner le modèle représentant une connaissance et un comportement de l'application ;
- une étape d'instrumentation consistant à
- invoquer l'instrumenteur pour instrumenter l'application ;
- placer un certain nombre d'observateurs à des points déterminés pendant une analyse sans exécuter une application ;
- placer des modificateurs à des points déterminés pendant une analyse sans exécuter une application, si besoin est ;instrumenter seulement les points qui aident à obtenir des faits nouveaux en outre en fonction d'une analyse coordonnée avant un processus d'instrumentation ;
- une analyse avec une étape d'application d'exécution consistant à
- invoquer un analyseur de temps de fonctionnement externe pour effectuer des tests externes et une analyse externe sur une application pendant un processus de coordination et d'orchestration à voies multiples ;
- invoquer un analyseur de temps de fonctionnement interne pour capturer des informations de temps de fonctionnement de l'application à partir d'un certain nombre d'observateurs pendant un processus de coordination et d'orchestration à voies multiples ;
- invoquer un analyseur de temps de fonctionnement interne pour altérer ou pour stopper le flux d'application ou pour modifier des données avec des modificateurs pendant un processus de coordination et d'orchestration à voies multiples, si besoin est ;
- invoquer un analyseur statique, un simulateur dynamique et un émulateur dynamique pendant un processus de coordination et d'orchestration à voies multiples ;
- effectuer un processus de coordination et d'orchestration à voies multiples dans l'ensemble d'un analyseur de temps de fonctionnement externe, d'un analyseur de temps de fonctionnement interne, d'un analyseur statique, d'un simulateur dynamique et d'un émulateur dynamique pour construire et pour affiner le modèle représentant une connaissance et un comportement de l'application ;
- une étape de règles et de signalement consistant à
- utiliser des règles pour piloter encore les composants ;
- créer un signalement contenant des constats et une synthèse en fonction de l'analyse effectuée.

2. Système selon la revendication 1, le système servant à détecter des problèmes liés à la sécurité et à la qualité consistant à
- effectuer une analyse de sécurité d'application en utilisant des règles spécifiques de sécurité dans l'étape de règles et de signalement de la revendication 1 ;
- effectuer une analyse de qualité d'application en utilisant des règles spécifiques de qualité dans l'étape de règles et de signalement de la revendication 1.

3. Système selon la revendication 1, le système donnant en outre la capacité d'analyser l'application même lorsque l'environnement en temps d'exécution réel d'application n'est pas disponible, comprenant
- l'analyse sans exécuter l'étape d'application de la revendication 1 ;
- des règles et l'étape de signalement de la revendication 1.

4. Système selon la revendication 1, le système utilisant en outre des sous-procédés multiples pour l'analyse, dans laquelle un certain nombre de sous-procédés fonctionnement simultanément, chacun s'occupant d'une zone ou d'un aspect différent(e) du modèle multidimensionnel et coordonnant et orchestrant indépendamment.
